# EUROPEAN PATENT APPLICATION

(11) **EP 3 928 875 A1**
(43) Date of publication of application: **29.12.2021**
(21) Application number: 20182646.8
(22) Date of filing: 26.06.2020
(51) Int. Cl.: B05B 7/24, B05B 12/00, B05B 15/62, C09D 7/43, B05B 7/08, B05B 7/06

(54) **LIQUID SPRAY ASSEMBLY AND COMPATIBLE LIQUID FORMULATIONS**

(71) Applicant: PPG Europe B.V., 1422 AD Uithoorn (NL)
(72) Inventor: VAN DEN BERG, Anthonius Hendrikus Wilhelmus, 2343 JW Oegstgeest (NL); WEIJNEN, Johannes Gerardus Josef, 2408 KA Alphen aan den Rijn (NL)
(74) Representative: Appleyard Lees IP LLP

(57) **Abstract**

A liquid spray assembly comprises a liquid spray apparatus (1a) and a liquid, for example a paint. The spray apparatus (1a) comprises a reservoir (100) for the coating liquid, a spray applicator (300), and means (134) for urging liquid from the reservoir (100) to the spray applicator (300). At the outlet of the spray applicator the liquid is atomised by a flow of primary pressurised gas; and downstream the atomised spray profile is modified by a flow of secondary pressurised gas. It has been determined that the effective use of this type of spray apparatus can be achieved by using a particular class of coating liquids, which have a defined solids content, viscosity and amount of an organic or organically modified thickener, of which over 50 wt% is an organic or organically modified associative thickener. A method of using the liquid spray apparatus is also described.

## Description

### FIELD

The invention relates in general to a liquid spray assembly intended to deliver a spray of a coating liquid. The liquid may be projected onto a surface in order to provide a dried coating on the surface after a drying period. The invention also relates to methods of using a liquid spray assembly and to compatible liquids which are aqueous formulations, for example water-based paints, lacquers and varnishes, suitable for spraying onto a surface using such an assembly, and for drying on the surface.

### BACKGROUND

We refer to 'liquid' or 'coating liquid' in this specification but for ease of reading we also refer to 'paints' and 'painting'. When we refer to 'paints' and 'painting' it is to be understood that the invention relates more generally to coating liquids applied by spraying onto a surface, and that such liquids may include paints, varnishes lacquers and other such coatings.

Conventionally, a surface to be painted is painted by hand using a brush, pad or roller (conventional applicators). Although painting by brush, in particular, can be accurate, the application of the paint onto a surface in this manner is slow. The use of a pad or roller helps to speed up the painting process compared to the use of a brush, albeit at the cost of some accuracy. Nevertheless, all of the aforementioned approaches require paint to be frequently absorbed onto the specific conventional applicator before the paint can be transferred to the surface to be painted.

Another conventional paint application approach is to spray paint towards a surface. Spraying is more efficient than direct contact of the applicator to the surface because the sprayed paint is typically applied in a continuous or semi-continuous manner from a reservoir. Furthermore, the coverage of paint onto a surface is generally more consistent than is achieved by use of a brush, pad or roller application and local accumulations of paint (i.e. unwanted lumps) are avoided. However spraying is not optimal. Some spray apparatus leads to splashback (also known as bounce back) of the paint. Further, there may be the formation of a mist of paint in the air. This can be a breathing hazard to the painter. Additionally, it is often difficult to control the quality of an edge finish. In particular, drift of the paint can lead to overspray, i.e. application of the paint onto an unintended location. To overcome this, high-pressure spray apparatus may be used to ensure effective and accurate application of the paint. However, high-pressure spray apparatus may increase the risk of splashback.

Splashback and overspray may lead to nearby surfaces (including those of the painter) becoming inadvertently coated. Nearby surfaces are often therefore cleaned after the spray operation or covered beforehand. If splashback and overspray can be minimised, the need to extensively mask surfaces, which is time and cost inefficient, can be significantly reduced. If mist formation can be suppressed the hazard to the painter can be minimised.

We have developed a liquid spray assembly, which we describe and define below. We have found that liquids which satisfy a set of defined parameters are especially suitable for use in such a liquid spray assembly, whereas liquids which do not satisfy such parameters are less suitable, or may be entirely unsuitable.

### SUMMARY

According to the present invention there is provided a liquid spray assembly comprising a liquid spray apparatus and a liquid to be sprayed therefrom,
wherein the liquid spray apparatus comprises:
   - a reservoir having a liquid outlet
   - a spray applicator connected to the reservoir to receive liquid therefrom
   - means for urging liquid from the reservoir to the spray applicator
   - an outlet in the spray applicator for the expulsion of liquid
   - a primary gas outlet in the spray applicator for atomising expelled liquid
   - a secondary gas outlet in the spray applicator for impinging upon the expelled and atomised liquid and modifying its spray profile
wherein the liquid satisfies each of the following parameters:
   a) the solids content of the liquid is in the range from 30 wt% to 65 wt%, based on the total weight of the composition
   b) the liquid has a low shear viscosity (measured on a Physica Rheolab MC1 viscometer using a E100 spindle at a rotation speed of 181 rpm at 23°C) in the range from 5 dPa.s to 50 dPa.s
   c) the liquid contains from 0.03 to 2 wt% (based on the total weight of the composition) of an organic or organically modified thickener where over 50 wt% (based on the total weight of said organic or organically modified thickener) is an organic or organically modified associative thickener.

The liquid spray apparatus and the liquid together make up the liquid spray assembly.

Further, optional, features of the liquid spray assembly will now be described, and are set out in the claims. Later in the specification we will describe features of the liquid compositions, by way of illustration.

### DETAILED DESCRIPTION OF THE PAINT SPRAY APPARATUS

The liquid spray apparatus may comprise:
- a main body which houses the reservoir, and
- a displacement member moveable within the main body for varying the volume of the reservoir thereby urging the liquid through the liquid outlet of the reservoir and towards the spray applicator.

A displacement member may have a liquid contacting side and a gas contacting side, and the main body may comprise a gas inlet in fluid communication with the gas contacting side of the displacement member. The liquid spray apparatus may comprises a source of pressurised gas in fluid communication with the gas contacting side of the displacement member and arranged to be operable to move the displacement member and thereby advance the liquid from the reservoir to the spray applicator.

The displacement member may comprise a flexible membrane.

The flexible membrane may be coupled to the main body at a portion of the gas inlet and a portion of the liquid outlet.

The liquid outlet portion of the reservoir and the gas inlet portion of the main body may be arranged at or towards opposite ends of the main body.

The main body may comprise a coating provided on a gas contacting side for preventing adhesion of the flexible membrane with the main body.

The liquid spray apparatus may comprise a support structure, which may comprise an accommodating part for receiving the reservoir. The reservoir may be provided in a receptacle, which may be in the form of a cartridge.

The reservoir may comprise a one-way valve for restricting liquid flow into the reservoir.

The gas inlet of the liquid spray apparatus may comprise a one-way valve.

The liquid spray apparatus may comprise a connecting member interposed between the liquid outlet portion of the reservoir and the liquid inlet of the spray applicator. The connecting member may be connectable to a first transmission line for transmitting liquid from the liquid outlet portion of the reservoir to the connecting member and a second transmission line for transmitting liquid away from the connecting member and to the liquid inlet of the spray applicator.

The support structure may comprise a reservoir-holding part and a ground-contacting part wherein the ground-contacting part is moveable relative to the reservoir-holding part for guiding the reservoir-holding part over ground.

The support structure may be arranged for supporting the source of pressurised gas. The support structure may be wearable by a user.

The support structure may be arranged to encase the reservoir.

The source of pressurised gas may comprise a compressor.

The source of pressurised gas may comprise a container of pressurised gas.

The liquid of the liquid spray assembly may comprise a water-based paint, varnish or lacquer or other film-forming composition.

There is also provided a method of using a liquid spray assembly as described and/or defined herein, comprising the steps of:
- providing the liquid spray apparatus with a reservoir of a coating liquid to be sprayed
- moving the liquid towards the spray applicator
- activating the spray applicator, thereby to:
   - expel liquid from the outlet valve of the spray applicator
   - expel primary gas from a primary gas outlet of the spray applicator, for atomising the liquid being expelled; and
   - expel secondary gas from a secondary gas outlet of the spray applicator for impinging upon the expelled and atomised paint and modifying its spray profile.

The method may include using pressurised gas to deliver liquid to the liquid outlet of the spray applicator.

Pressurised gas may be delivered to a displacement member of the reservoir from a source of pressurised gas in order to propel liquid.

The method may comprise filling the reservoir with liquid during manufacture and providing a cartridge comprising the reservoir.

The method may comprise disturbing a tamper-proofing means comprised by the cartridge. The method may comprise disturb the tamper-proofing means during loading the cartridge into the support structure.

The method may comprise releasing gas from a gas side of the displacement member using a pressure relief valve for equalising pressure with ambient air.

The method may comprise wearing the support structure.

The receptacle may comprise a pressure relief valve operable to equalise pressure on the gas side of the displacement member with ambient air.

The liquid of the method may be a water-based coating composition, such as a paint, varnish or lacquer. Suitable lacquers may include oxidatively drying water based alkyd or acrylic lacquers.

There is also provided a kit of parts for a liquid spray assembly as defined and/or described herein, comprising:
- a first cartridge housed in a support structure of the liquid supply apparatus, the cartridge containing a coating liquid, the first cartridge being operatively connected to the liquid supply apparatus such that it is able to supply liquid to the spray applicator,
- a second cartridge containing a coating liquid, wherein the second cartridge is not operatively connected to the liquid supply apparatus,
- the first cartridge being removable from the support structure when empty and replaceable in the support structure by the second cartridge.

First and second cartridges may contain coating liquids which give dried coatings of identical colour or of different colours.

First and second cartridges may contain coating liquids which give dried coatings of identical finish or of different finishes; for example matt finish or silk finish.

The kit may comprise a plurality of second cartridges not operatively connected to the liquid supply apparatus. For example there may be three or more cartridges. They are therefore available for rapid deployment, when needed.

The liquid spray assembly may comprise a receptacle for holding liquid. The receptacle includes a main body and a displacement member movable within the main body. The displacement member may therefore be a moveable member. The main body may be an outer part of the receptacle and encloses the displacement member.

The receptacle may comprise a reservoir having a reservoir outlet, such as adapted to allow release of the liquid from the reservoir.

The displacement member may be configured to move relative to the main body in order to vary the capacity of the reservoir. The displacement member comprises a liquid contacting side and a gas contacting side. The liquid contacting side and the gas contacting side may be permanent in that, when liquid is present in the receptacle, the liquid is always present on the liquid contacting side. The receptacle further comprises a gas inlet. The gas inlet is communicable with the gas contacting side of the displacement member. That is, the gas inlet is in fluid communication with gas contacting side of the displacement member. The spray assembly further comprises a support structure for supporting the receptacle. That is, the support structure may restrict movement of the receptacle relative to the support structure. Therefore, when the receptacle is coupled to the support structure, the receptacle and support structure may be provided as one body.

The spray assembly comprises a spray applicator. The spray applicator may be configured to release liquid in the form of spray. The spray applicator comprises a liquid inlet for receiving liquid from the liquid outlet of the reservoir, a liquid outlet or nozzle, and a liquid outlet valve for controlling the release of liquid via the nozzle. The spray applicator may comprise an actuator, for example a trigger, for controlling the liquid outlet valve, and thereby the advance of liquid to the nozzle, and out from the nozzle; and for terminating the advance of the liquid and its expulsion from the nozzle.

The spray assembly may further comprise a source of pressurised gas. The source of pressurised gas may be in fluid communication with the gas contacting side of the displacement member and is arranged to be operable to move the displacement member, in use. The source of pressurised gas may be operable to provide a driving force to move the displacement member so that liquid is expelled from the reservoir and out of the spray applicator.

The gas pressure applied to advance the liquid to the liquid outlet of the spray applicator may be up 3.5 bar (3.5 x 10⁵ Pa). The gas pressure may be in the range from 1.2 bar to 3 bar, such as in the range from 1.5 bar to 2.5 bar. For example, the pressure may be in the range from 1.8 bar to 2.2 bar. These pressure values are in addition to atmospheric pressure.

The gas pressure applied to advance the liquid may be controlled by a control valve.

The same pressurised gas source (1) may urge the liquid from the reservoir to the spray applicator; (2) supplies pressurised gas to the primary gas conduit within the spray applicator for atomising the liquid being expelled; and (3) supplies pressurised gas to the secondary gas conduit within the spray applicator for impinging upon the expelled atomised paint and modifying its spray profile.

The receptacle may be provided as a cartridge. Advantageously, the receptacle or cartridge is easy to install and the risk of liquid loss is reduced. Removal of the receptacle or cartridge may only be possible by allowing gas to be released from inside the cartridge to allow the displacement member to move.

The cartridge may comprise a tamper-proofing means such as a tamperproof seal. The cartridge may comprise a one-way valve for restricting liquid flow into the cartridge. The gas inlet may be the one-way valve. The one-way valve may be overridden to release gas from the gas contacting side of the displacement member. The receptacle or cartridge may comprise a pressure relief valve for equalising pressure on the gas side of the displacement member with ambient gas. That is, the effect of a one-way valve may be overcome by the pressure relief valve.

The spray assembly may comprise a plurality of receptacles or cartridges. Alternatively, the spray assembly may comprise a single receptacle that is in use at any one time and space for accommodating another receptacle that is not in use. The reservoir of each receptacle may have a different volumetric capacity. A plurality of receptacles may be in fluid communication with the spray applicator or only one receptacle at any one time may be in fluid communication with the spray applicator.

An inner wall of the main body that is configured to contact gas rather than liquid may comprise a non-stick coating to allow the displacement member to contact the inner wall without sticking thereto. The non-stick coating may be a sprayable non-stick coating. The term non-stick refers to a reduction in tackiness such that abutting parts are prevented from being bonded to each other. The non-stick coating applied to the inner wall may have the effect of reducing the adherence of the displacement member to the main body such that the displacement member can move freely. When the displacement member comprises a flexible membrane, the main body may comprise a coating arranged on a gas contacting side for preventing adhesion of the flexible membrane with the main body. The coating may therefore be a non-stick coating.

The main body may be cylindrical. The main body may comprise a neck within which the liquid outlet of the reservoir is arranged. The main body may be a pressure vessel to allow the reservoir to be under pressure. That is, the main body may resist deformation under liquid and/or gas pressure.

The main body may define part of the reservoir. The portion of the main body forming part of the reservoir may be variable depending on the varying capacity of the reservoir. The displacement member alone may define the reservoir such that when the reservoir contains liquid the liquid is not configured to come into contact with the main body. The reservoir outlet may also function as an inlet but may only be operable when gas is releasable from the gas contacting side because gas between the displacement member and the main body may prevent the reservoir from filling and/or refilling.

The displacement member may be slidably arranged relative to the main body. That is, the movement of the displacement member may be a sliding movement. The displacement member may be generally rigid or generally flexible.

The displacement member may comprise a flexible membrane that is operable as a bladder. The bladder may contract and expand. Expansion of the bladder may cause a reversible thinning of the membrane. The main body may determine a limit of expansion of the bladder, particularly an inner wall of the main body. The flexible membrane may be coupled to the main body of the receptacle at a portion of the gas inlet and a portion of the liquid outlet. This ensures that the flexible membrane is held relative to the main body.

The liquid outlet portion of the receptacle and gas inlet portion of the receptacle are arranged at or towards opposite ends of the receptacle. The liquid outlet portion may be arranged in a neck of the main body.

The support structure may comprise an accommodating part for receiving the receptacle. A first liquid transmission line may interlink the receptacle and the spray applicator. A first gas transmission line may interlink the source of pressurised gas and the receptacle. A second gas transmission line may interlink the receptacle and the spray applicator.

A first liquid transmission line may interlink the receptacle and a control unit and a second liquid transmission line may interlink the control unit and the spray applicator. Additionally, a first gas transmission line may interlink the source of pressurised gas and the control unit, a second gas transmission line may interlink the control unit and the receptacle and a third gas transmission line may interlink the control unit and the spray applicator.

The support structure may comprise a connecting member interposed between the liquid outlet portion of the reservoir and the liquid inlet of the spray applicator. The connecting member may be connectable to a first transmission line for transmitting liquid from the liquid outlet portion of the reservoir to the connecting member and a second transmission line for transmitting liquid away from the connecting member and to the liquid inlet of the spray applicator. The connecting member may comprise a control valve. That is, the connecting member may be a control unit for controlling the flow of liquid from the receptacle to the spray applicator. A first gas transmission line and second gas transmission line may be similarly connected to either side of the connecting member, wherein the connecting member may comprise a gas control valve. The control unit may control either or both of the gas and liquid flows. The control unit may be wearable on a user, for example as a belt. The control unit may be attachable to the support structure.

The transmission lines may be elongate members having a passageway for the transportation of liquid or gas. The elongate members may be flexible so that their orientation can be changed. A transmission line may be a hose.

The support structure may be arranged to encase the receptacle. The support structure may comprise a hatch for accessing the receptacle. The hatch may be pivotable. The hatch may comprise a transparent portion for visual inspection of an inside of the support structure.

The support structure may comprise a receptacle holding part and a ground contacting part. The ground contacting part may be moveable relative to the receptacle holding part for guiding the receptacle holding part over ground. The ground contacting part may comprise at least one wheel. The ground contacting part may comprise a plurality of wheels for stability. Therefore, the support structure may be provided in the form of a trolley.

The support structure may comprise a handle for manually gripping the support structure. The handle may be telescopic. The support structure may have a resting position that is configured to maintain a base of the receptacle parallel to a ground surface.

The support structure may be arranged to support the source of pressurised gas. The source of pressurised gas may be enclosed by the support structure. The support structure may be wearable on a user. For example, the support structure may be provided in the form of a backpack.

The spray applicator may be in the form of a spray gun. The spray gun may be pistol-shaped having a pistol-grip and a transverse barrel, from the distal end of which the spray is 'fired', in use. The spray gun may be held in a user's hand and the actuator, which may be in the form of a trigger, may be operated by one or more of the user's fingers, such as a user's forefinger (index finger).

The trigger may be depressible towards a handle or grip of the spray applicator. The trigger may be biased away from a handle, or grip, by a biasing means. That is, it may be biased to the position in which spraying does not occur. The biasing means may comprise a resilient member. The resilient member may be a spring, for example a compression spring. The trigger may be moved from a resting position to a pre-loading position before liquid expulsion is commenced. This may allow for unwanted movement of the trigger to be absorbed without the expulsion of liquid from the spray applicator. Therefore, the movement between the resting position and the pre-loading position may be a non-activation event. Further movement of the trigger, beyond the pre-loading position, produces expulsion of the liquid.

When the trigger is released by the operator it is urged to its rest position (its off position, and its outermost position) by the biasing means. Flow of liquid is thereby terminated. Further, the two conduits which deliver gas to the primary gas outlet and the secondary gas outlet, i.e. the second and third conduits, are closed. When the trigger is depressed, against the biasing means and beyond any pre-loading position, liquid flow commences and the gas conduits are opened.

The trigger may open or close the second and third conduits commonly, to the same extent. The trigger may not permit the opening of one conduit to a greater extent than the other.

Thus the spray applicator may have three independent conduits disposed through it. The first conduit is for liquid transmission. The second conduit is the primary gas conduit and is for delivery of primary pressurised gas to the liquid issuing from the spray applicator. The third conduit is the secondary gas conduit and is for delivery of secondary pressurised gas to the spray liquid after it has left the spray applicator. Each conduit may extend through the actuator from its handle to respective outlets independently of the other conduits. When the spray applicator is pistol-shaped the three conduits may be disposed in the handle or grip, and lead to the distal end of the barrel, where they may have separate outlets.

The spray assembly may comprise a primary gas outlet that is in fluid communication with a source of pressurised gas. A function of the primary gas is to act upon the liquid and form a spray thereof. The liquid outlet may be provided upstream of the primary gas outlet but the liquid outlet and the primary gas outlet may be located closely adjacent to each other such that liquid and primary gas issue together from the spray applicator, and immediately mix. They may form a divergent spray, for example a generally conical, spray.

The pressure of the primary (atomising) gas may be up to 1.5 bar (1.5 x 10⁵ Pa). The pressure of the primary gas may be in the range from 0.5 bar to 1.5 bar, such as in the range from 0.7 bar to 1.3 bar. For example, the pressure may be in the range from 0.8 bar to 1.2 bar, such as about 0.9 to 1.1 bar. These pressure values are in addition to atmospheric pressure. Primary gas at such pressure may help to achieve efficient atomisation with a low level of turbulence and therefore provides good control. These pressure values are in addition to atmospheric pressure.

The pressure of the primary gas may be controlled by a primary gas control valve. This may be provided anywhere within the spray assembly. However, it may not be provided in the spray applicator, but upstream of it, in the spray apparatus.

The spray assembly may comprise a secondary gas outlet which may be in fluid communication with a source of pressurised gas. A function of the secondary gas is to vary the spray pattern of liquid spray from the liquid outlet. Typically the primary gas acting upon the expelled liquid produces a divergent, for example conical, spray of the liquid. This is generally not suitable for fast accurate coating. The secondary gas may modify the shape to be, for example, an elliptical or fan shape. The secondary gas outlet may therefore be provided downstream of the primary gas outlet.

The pressure of secondary (shaping) gas may be up to 1.5 bar (1.5 x 10⁵ Pa). The pressure of the secondary gas may be in the range from 0.5 bar to 1.5 bar, such as in the range from 0.7 bar to 1.3 bar. For example, the pressure may be in the range from 0.8 bar to 1.2 bar, such as about 0.9 to 1.1 bar. These pressure values are in addition to atmospheric pressure. Secondary gas at such pressure may assist in achieving a desired re-shaping of the spray profile of emitted liquid.

The pressure of the secondary gas may be controlled by a secondary gas control valve. This may be provided anywhere within the spray assembly. However, it may not be provided in the spray applicator, but upstream of it, in the spray apparatus.

A control valve may be provided to control the gas pressure which is applied to advance the liquid.

A primary gas control valve may be provided to control the gas pressure of the primary gas.

A secondary gas control valve may be provided to control the gas pressure of the secondary gas.

Each of these control valves may be operable independently of the other of these control valves.

The distal (liquid-emitting) end of the spray applicator may have a nozzle, or liquid outlet, for expulsion of the liquid. Around the nozzle there may be located the primary gas outlet, to atomise the liquid. The nozzle and the primary gas outlet may produce a divergent, for example generally conical, spray pattern of liquid. The primary gas outlet may be in the form of a single annular primary gas outlet around the nozzles(s) or it may be an array or cluster of outlets. The term primary gas outlet is used herein but the reader will understand that both single and plural outlets are envisaged.

The spray applicator may have a single nozzle for liquid expulsion. A single nozzle may be in the form of a hole or an annulus. The spray applicator may have multiple nozzles for liquid expulsion. The term nozzle is used herein but the reader will understand that both single and plural liquid outlets are envisaged.

A single secondary gas outlet may be employed. However secondary gas outlets may be present. Whether a single secondary gas outlet or plural secondary gas outlets is/are used, the location thereof may be at the outlet end of spray applicator, downstream of the nozzle and of the primary gas outlet.

The liquid spray apparatus may have secondary gas outlets, and these may generally face each other and produce opposed gas flows which are generally transverse to the flow of the atomised spray, and impinge onto the atomised spray from opposed sides of the spray and urge the spray into a generally elliptical or fan shape. There may be only two such secondary outlets, which face each other; or there may be two groups or clusters of secondary outlets which face each other.

There may be only two oppositely disposed secondary gas outlets (or groups or clusters of secondary outlets) located downstream of the nozzle and of the primary gas outlet and no further secondary gas outlets (or groups or clusters of secondary outlets). In other words it could be considered that secondary gas outlets (or groups or clusters of secondary outlets) are located generally at 'North' or 'South' only, and not also at 'East' or 'West' or any other location.

Secondary gas outlets may be located on the inner faces of projections or 'horns' which are located opposite each other, for example in diametrically opposed locations on the head of the spray applicator.

The actuator or trigger may be an on-off actuator and does not itself individually control the flow of liquid, or primary gas, or secondary gas, other than in the sense of 'on' or 'off'. However as explained elsewhere liquid, primary gas, and secondary gas may be independently controlled by other means, such as by individual control valves.

The assembly may be such that on commencement of an individual action of liquid spraying, primary gas is expelled by the spray applicator substantially at the same time as liquid, or before any liquid is expelled, such as before any liquid is expelled.

The assembly may be such that on termination of that individual action of spraying, primary gas flow from the spray applicator is terminated substantially at the same time as liquid flow is terminated or after liquid flow is terminated, such as after liquid flow is terminated.

The objective of such measures is to ensure that when the liquid is expelled primary (atomising) gas is also expelled.

The assembly may be such that on commencement of an individual action of liquid spraying, secondary gas is expelled by the spray applicator substantially at the same time as liquid or before any liquid is expelled, such as before any liquid is expelled.

The assembly may be such that on termination of that individual action of spraying, secondary gas flow from the spray applicator is terminated substantially at the same time as liquid flow is terminated or after liquid flow is terminated, such as after liquid flow is terminated.

The objective of such measures is to ensure that when the liquid is expelled secondary gas is also expelled.

The assembly may be such that on commencement of an individual action of liquid spraying, both primary and secondary gas are expelled by the spray applicator substantially at the same time as liquid or are expelled before any liquid is expelled, such as before any liquid is expelled.

The assembly may be such that on termination of that individual action of spraying, both primary and secondary gas flow from the spray applicator are terminated substantially at the same time as liquid flow is terminated or after liquid flow is terminated, such as after liquid flow is terminated.

The objective of such measures is to ensure the liquid cannot be expelled without primary and secondary gas being co-expelled.

The spray apparatus may comprise a holder or cradle in which the spray applicator rests when it is not be actively used for spraying. The spray actuator may be protected from being unintentionally depressed when located in the cradle.

The spray assembly may have an override switch which can be activated to rapidly terminate liquid spraying. In this way, the force applied to the liquid may be removed. Where gas is used to advance the liquid, this may be achieved by venting the gas to ambient air pressure.

As noted herein the delivery of liquid to the spray applicator may be controlled to alteration of the pressure applied to it in the control unit. The quantity of liquid sprayed from the spray applicator may alternatively or additionally be controlled by a regulator comprising a needle whose distal end is adjacent the outlet nozzle and whose proximal end is under the control of a control member, for example a dial. Turning the dial advances or withdraws the needle device. The needle device may be housed within an annular chamber extending substantially within the major extent of the barrel of the spray actuator. Further information about this mechanism is given in WO 2016/024107 A1.

Thus a suitable spray apparatus may give the operator a number of control elements, namely one or more of, or all of, the following:
- an on-off actuator, for example a trigger, which permits or prohibits flow of liquid, primary gas and secondary gas
- a regulator to control the pressure which is applied to the liquid, to deliver it to the spray applicator
- a regulator within the spray applicator to further control the rate of flow of the liquid to be sprayed
- a regulator to control the pressure of the primary gas, used to atomise the liquid
- a regulator to control the pressure of the secondary gas, used to modify the spray pattern.

The spray applicator may be generally as described in WO 2016/024107 A1 (with modifications described herein) and the contents of that specification may be consulted.

The regulators to control the pressure applied to the liquid and the pressure of the primary gas and the secondary gas may be elements of the main unit, and the actuator and the regulator which further controls the rate of flow of the liquid to be sprayed may be elements of the spray applicator.

A source of pressurised gas may be a gas compressor. The compressor may be electronically operated. The source of pressurised gas may be connected to an energy store for providing energy to operate the compressor, for example a battery. Alternatively, or additionally, the source of pressurised gas may be operable by mains electricity.

The source of pressurised gas may be a canister of pressurised gas.

The gas may be air. Thus a source of pressurised gas may be an air compressor or a compressed air canister.

A method of using a liquid spray assembly is also provided. The method may comprise the step of filling a reservoir with liquid. The method may further comprise loading the reservoir into a support structure. The method may further comprise supplying gas to a displacement member from a source of pressurised gas. The method may further comprise moving the displacement member using gas supplied by the source of pressurised gas. That is, the source of pressurised gas may provide the motive force for moving the displacement member. The method may further comprise guiding liquid from the reservoir towards a spray applicator, activating an actuator, for example trigger, of the spray applicator and propelling liquid from an outlet valve of the spray applicator.

The step of filling the reservoir with liquid may be performed during manufacture and the reservoir is provided as a cartridge. That is, a reservoir may not easily be filled by an end-user. The step of filling the reservoir may comprise expanding the reservoir in proportion to the increase in received liquid volume. That is, the reservoir may have a smaller first (or pre-filled) volume compared to a second (or filled) volume. The step of filling the reservoir may comprise opening a one-way valve. A gas inlet of the reservoir may comprise the one-way valve. The one-way valve may be kept open while the reservoir is filled.

The step of loading the reservoir into the main body may comprise loading the reservoir along guiding means. The guiding means may be guiding rails. The guiding means may conform to a shape of an outer wall of the reservoir. The step of loading the reservoir into the support structure may comprise loading the receptacle until a gripping means is engaged. The gripping means may be biased towards a central space in which the receptacle is loaded. The gripping means may be moved under pressure. The pressure may be overcome by hand when pushing the reservoir into the support structure by hand.

There is also provided a method of using a liquid spray assembly, comprising a liquid spray apparatus and a liquid,
the method comprising the steps of:
   filling a reservoir of a receptacle with a coating liquid;
   loading the receptacle into a support structure;
   supplying gas to a displacement member of the receptacle from a source of pressurised gas;
   moving the displacement member relative to a main body of the receptacle with gas supplied by the source of pressurised gas;
   guiding liquid from the reservoir towards a spray applicator;
   activating a trigger of the spray applicator;
   propelling liquid from an outlet valve of the spray applicator using gas from the source of pressurised gas as propellant;
   delivering primary gas from the source of pressurised gas to a primary gas outlet of the spray applicator so that the liquid and primary gas form an atomised spray pattern; and
   delivering secondary gas from the source of pressurised gas to a secondary gas outlet of the spray applicator so as to impinge upon the atomised spray pattern and modify its spray pattern;
wherein the liquid which satisfies each of the following parameters:
   a) the solids content of the liquid is in the range from 30wt% to 65wt% based on the total weight of the composition,
   b) the liquid has a low shear viscosity (measured on a Physica Rheolab MC1 viscometer using a E100 spindle at a rotation speed of 181 rpm at 23°C) is in the range from 5 dPa.s to 50 dPa.s,
   c) the liquid contains from 0.03 to 2 wt% (based on the total weight of the composition) of at least one organic or organically modified thickener where over 50 wt% (based on the total weight of organic or organically modified thickener) is an organic or organically modified associative thickener.

The method may comprise disturbing a tamper-proofing means comprised by the reservoir. Advantageously, a cartridge can remain closed until used by an end-user. The method may comprise disturbing the tamper-proofing means during loading the reservoir into the support structure. Advantageously, a separate step of removing the tamper-proofing means is not required which is more convenient for an end-user. A single action of loading the reservoir results in the tamper-proofing means being overcome.

The method may comprise the step of releasing gas from a gas side of the displacement member using a pressure relief valve for equalising pressure with ambient gas.

The method may comprise wearing the main unit. Alternatively or additionally, the main unit may comprise a ground contacting part and a reservoir holding part and the method may comprise moving the ground contacting part relative to the reservoir holding part so that the reservoir holding part is guided over ground. The ground contacting part may comprise at least one wheel. The ground contacting part may comprise a plurality of wheels for stability. Therefore, the main unit may be provided in the form of a trolley.

A kit of parts for a liquid spray assembly as provided and defined herein may be provided. The kit may comprise a cartridge filled with liquid for spraying, a spray applicator, a source of pressurised gas and a support structure for supporting the cartridge; the liquid meeting the requirements of solids content, low shear viscosity and thickener content as defined herein. The kit may comprise a plurality of reservoirs each containing a coating liquid meeting those requirements.

There is also provided a liquid spray assembly comprising a liquid spray apparatus and a liquid to be sprayed therefrom;
wherein the liquid spray apparatus comprises:
   - a reservoir containing a liquid and having a liquid outlet, wherein the coating liquid is a paint, varnish or lacquer
   - a spray applicator connected to the reservoir to receive liquid therefrom
   - a source of compressed air for urging liquid from the reservoir to the spray applicator
   - a liquid outlet in the spray applicator for the expulsion of liquid
   - a primary air conduit leading to a primary air outlet in the spray applicator adjacent to the liquid outlet, for atomising expelled liquid to form an atomised spray, using the same source of compressed air, wherein the air in the primary air conduit is at a pressure in the range from 0.7 to 1.3 bar (0.7 - 1.3 x 10⁵ Pa)
   - a secondary air conduit leading to secondary air outlets in the spray applicator, wherein the air in the secondary air conduit is at a pressure in the range from 0.7 to 1.3 bar (0.7 - 1.3 x 10⁵ Pa), supplied by the same source of compressed air, wherein the secondary air outlets expel air in opposed air streams onto the atomised spray transversely relative to the flow of the atomised spray, and from opposite sides of the atomised spray;
   - a spring-loaded liquid actuator provided on the spray applicator and having an off-position for preventing the expulsion of liquid, primary air and secondary air from the spray applicator and an on-position for permitting the expulsion of liquid, primary air and secondary air from the spray applicator, the actuator being biased towards its off-position; wherein liquid can only be expelled when primary air and secondary air are expelled
   - optionally, a liquid control valve to control the air pressure applied to advance the liquid;
   - optionally, a primary air control valve to control the primary air pressure; and
   - optionally, a secondary air control valve to control the secondary air pressure.
wherein the liquid satisfies each of the following parameters:
   a) the solids content of the liquid in the range from 30wt% to 65wt% based on the total weight of the composition
   b) the liquid has a low shear viscosity (measured on a Physica Rheolab MC1 viscometer using a E100 spindle at a rotation speed of 181 rpm at 23°C) in the range from 5 dPa.s to 50 dPa.s
   c) the liquid contains from 0.03 to 2 wt% (based on the total weight of the composition) of at least one organic or organically modified thickener where over 50 wt% (based on the total weight of said organic or organically modified thickener) is an organic or organically modified associative thickener.

The liquid spray assembly or the method may be used in conjunction with an unmanned aerial vehicle (UAV), such as a drone. The liquid spray assembly may be at least partially or wholly mounted on or in an unmanned aerial vehicle (UAV). The entire liquid spray assembly may be mounted on or in an unmanned aerial vehicle (UAV).

The spray applicator may be mounted on or in an unmanned aerial vehicle (UAV). The spray applicator may be mounted on or in an unmanned aerial vehicle (UAV), while the reservoir for holding liquid may be mounted not on the unmanned aerial vehicle (UAV). The reservoir for holding liquid may be connected to the UAV mounted spray applicator by one or more delivery conduits. The delivery conduits may be operable to deliver the liquid spray and pressured gas from the source of pressurised gas. Such an arrangement may allow for the UAV to administer the liquid spray at a position remote from the receptacle for holding liquid.

The liquid spray assembly or the method may further comprise operating the unmanned aerial vehicle (UAV) under remote control by a human operator or autonomously by onboard sensors/computers.

### DETAILED DESCRIPTION OF THE LIQUID COMPOSITIONS

The liquid may be a coating composition, such as a paint, lacquer or varnish or any other coating composition which forms a coating on a surface by drying. The paint may be an acrylic paint or an alkyd paint. For example, the paint or varnish or lacquer may be water based product. Suitable lacquers may include water based acrylic or alkyd lacquers.

The liquid may have a solids content of at least 30 wt%, such as at least 34 wt%, such as at least 38 wt%, or even at least 42 wt%.

The liquid may have a solids content of up to 65 wt%, such as up to 60 wt%, such as up to 58 wt%.

Solids content may arise from liquids added which have a solids content, for example binders and thickeners, and from solids which are added, such as clays and micas.

The liquid may have a low shear viscosity (measured as defined herein) of at least 5 dPa.s, such as at least 8 dPa.s, such as at least 10 dPa.s, such as at least 11 dPa.s, such as at least 12 dPa.s, such as at least 14 dPa.S.

The liquid may have a low shear viscosity of up to 50 dPa.s, such as up to 45 dPa.s, such as up to 40 dPa.s, such as up to 30 dPa.s, such as up to 25 dPa.s, such as up to 20 dPa.s, such as up to 16 dPa.S.

The liquid may contain at least 0.03 wt% of organic or organically-modified associative thickener based on the total weight of the composition. The liquid may contain at least 0.04 wt%, for example at least 0.05 wt%, or even at least 0.1 wt%, of organic or organically-modified associative thickener based on the total weight of the composition. The liquid may contain at least 0.2 wt% of organic or organically-modified associative thickener based on the total weight of the composition, such as at least 0.4 wt% of organic or organically-modified associative thickener based on the total weight of the composition. Over 50 wt% of organic or organically-modified thickener may present (based on the total weight of thickener) are organic or organically-modified associative thickener.

The liquid may contain up to 2 wt% of organic or organically-modified associative thickener based on the total weight of the composition. The liquid may contain up to 1.5 wt% of organic or organically-modified associative thickener based on the total weight of the composition; such as up to 1 wt% of organic or organically-modified associative thickener based on the total weight of the composition; such as up to 0.5 wt% of organic or organically-modified associative thickener based on the total weight of the composition; or even up to 0.3 wt% of organic or organically-modified associative thickener based on the total weight of the composition.

At least 50 wt% of organic or organically-modified thickener present may be organic or organically-modified associative thickener.

At least 55 wt% of organic or organically-modified thickener present may be organic or organically-modified associative thickener.

At least 60 wt% of organic or organically-modified thickener present may be organic or organically-modified associative thickener.

At least 70 wt% of organic or organically-modified thickener present may be organic or organically-modified associative thickener.

At least 80 wt% of organic or organically-modified thickener present may be organic or organically-modified associative thickener.

At least 90 wt% of organic or organically-modified thickener present may be organic or organically-modified associative thickener.

Substantially 100 wt% of organic or organically-modified thickener may be organic or organically-modified associative thickener. Thus the liquid may contain an organic or organically-modified associative thickener and no other organic or organically modified thickener.

Thickeners are used in paints to adjust viscosity in order to control various properties of the paints including sagging and also film build and levelling. Thickeners may be "non-associative thickeners" and "associative thickeners". Non-associative thickeners are water soluble or water-swellable polymers which increase viscosity mainly by overlap and/or entanglement of their polymer chains and/or by their occupation of large volumes of space within the paint. Non-associative thickeners act by thickening the aqueous phase without associating with other components of the liquid. Water molecules adhere to the polymers by hydrogen bonding leading to an increased hydrodynamic volume and reduced mobility of the water. These effects are promoted by the molecular weight, stiffness and straightness of their polymer chains. Associative thickeners are also water-soluble or water-swellable polymers. They have chemically attached hydrophobic blocks or groups that are capable of self-association into micellar-like assemblies as well as being capable of non-specific adsorption onto all colloidal surfaces present. This behaviour results in a transient network of polymer chains which increase the viscosity of paints.

In the present invention which concerns paint spraying we have found that to achieve effective paint spray operation and good paint coating and filming characteristics the presence of an organic or organically modified associative thickener is needed; but with control of other product characteristics, namely solids content and viscosity. In contrast a non-associative thickener is only optional.

Organic or organically modified thickeners and associative thickeners which may be used in the present invention will now be described.

Organic or organically modified associative thickeners are typically characterized by a hydrophobe - hydrophile - hydrophobe structure. The fact that each associative thickener molecule contains at least two hydrophobic blocks or groups (separated by hydrophilic segment(s)), promotes the formation of a three-dimensional network within the paint, which in turn increases the viscosity. A hydrophobic segment may be defined as any organic moiety which, if the point(s) of attachment to the hydrophilic segments were replaced by bonds to hydrogen atoms, would have a solubility in water at 20°C of less than 1 wt% based on the total weight of the hydrogen-terminated hydrophobic segment. A hydrophilic segment may be defined as any organic moiety which, if the point(s) of attachment to the hydrophobic segments were replaced by bonds to hydrogen atoms, would have a solubility in water at 20°C at some pH between 2 and 12 of greater than 5 wt% based on the total weight of the hydrogen-terminated hydrophilic segment.

One class of organic or organically modified associative polymers that can be used in the present invention is the class known as HASE - standing for Hydrophobically modified Alkali Swellable Emulsions. These are hydrophobically modified acrylic thickeners. HASE molecules have hydrophilic backbones comprising salts of polymerised or copolymerised unsaturated carboxylic acids or acid anhydrides such as acrylic or methacrylic acids or maleic anhydride. Hydrophilic moieties such as polyalkylene glycols (eg. polyethylene glycol) are attached to the hydrophilic backbones and hydrophobic blocks or groups are in turn are attached to the hydrophilic moieties. In use, solutions of these HASE thickeners are added as free-flowing liquids to a coating composition at neutral or slightly acidic pH. An increase in viscosity is then caused by raising the pH to mildly alkaline conditions (say 8 to 9) whereupon carboxylate anions are formed.

Another class of organic or organically modified associative polymers that can be used in the present invention is the class of block/condensation copolymers known as HEUR - standing for Hydrophobically modified Ethylene oxide Urethane Rheology modifiers. HEUR molecules typically comprise hydrophilic blocks or groups and hydrophobic blocks or groups terminating in hydrophobic blocks or groups. The hydrophilic blocks or groups may be provided by polyalkylene oxide (especially polyethylene oxide) moieties of relatively low molecular weight for example below 12,000 Da, and in some examples between 3,200 Da and 8,200 Da. The hydrophilic blocks or groups are condensed with for example hydrophobic urethane-forming diisocyanates such as toluene diisocyanate.

Examples of suitable HEUR thickeners are urethane polymers having at least three low molecular weight hydrophobic blocks or groups at least two of which are terminal (external) hydrophobic blocks or groups. Many of the polymers also contain one or more internal hydrophobic blocks or groups. The hydrophobic blocks or groups may in summation contain a total of at least 20 carbon atoms and are linked through hydrophilic (water soluble) blocks or groups. The size of the hydrophobic blocks or groups varies in the range of from 50 to 700 grams per mole, such as in the range of from 100 to 500 grams per mole or even in the range of from 200 to 350 grams per mole. The molecular weight of the thickener is such that it can readily solubilize in water, either by self-solubilization or through interaction with a known solubilising agent, such as a water miscible alcohol or surfactant. The molecular weight of the thickener is in the range of from 5,000 to 200,000, such as in the range of from 5,000 to 50,000, such as in the range of from 10,000 to 30,000 or even in the range of from 15,000 to 20,000.

The HEUR polymers may be prepared in non-aqueous media and may be the reaction products of a reaction mixture comprising a reactant (a) with one or more of the reactants (b), (c) and (d), set out below:
(a) at least one water soluble polyether polyol
(b) at least one water insoluble organic polyisocyanate
(c) at least one hydrophobic organic compound selected from monofunctional active hydrogen compounds and
(d) at least one organic monoisocyanate.

The products formed may include the following:
(1) Reaction products of a reaction mixture comprising a reactant (a) containing at least three hydroxyl groups, and the foregoing organic monoisocyanates (d);
(2) Reaction products of a reaction mixture comprising reactant (a), reactant (b) containing two isocyanate groups, and the foregoing active hydrogen containing compounds (c); such as wherein the ratio of equivalents of (a) to (b) is 0.5:1 to 1:1.
   In such reactions reactant (b) may be present in excess);
(3) Reaction products of a reaction mixture comprising reactant (a), reactant (b) containing at least three isocyanate groups, and the active hydrogen containing compounds (c);
(4) Reaction products of a reaction mixture comprising reactant (a), reactant (b) containing at least three isocyanurate groups and the organic monoisocyanates (d); and
(5) Reaction products of a reaction mixture comprising reactants (a), (b), (c) and the organic monoisocyanates (d).

Another class of organic or organically modified associative polymers that can be used in the present invention is the class known as HEURASE Thickeners. This is a class of hydrophobically modified ethoxylated oxide urethane alkali-swellable emulsion products. HEURASE thickeners combine the functionality of the HASE and HEUR types. These are alkali-soluble addition terpolymers produced by the emulsion polymerization of a carboxyl functional monomer, a water insoluble monomer, and a hydrophobic-terminated urethane functional ethoxylate monomer. Different products and characteristics can be achieved by varying the ratio of the three monomers, the type of hydrophobe and the degree of ethoxylation. These materials are supplied as aqueous emulsions of water insoluble polymer. When a base, such as ammonium hydroxide is added, the polymer swells, becomes soluble and strongly associates with water - hence its thickening action. The HEURASE types of thickeners (water-soluble polymers) have relatively long chains within the polymer. There are also many carboxyl anions scattered along the polymer backbone, which repel one another. The hydrophobe interaction is what is responsible for the thickening mechanism in this type of polymer.

Another class of organic or organically modified associative polymers that can be used in the present invention is the class known as Aminoplast Associative Thickeners. The class known as HEAT stands for Hydrophobically modified Ethoxylated Aminoplast Thickeners. The aminoplast linkage is done by use of an aminoplast instead of a diisocyanate. The aminoplast linkage in most cases is more hydrophilic and more water-soluble than the diurethane groups. The ability to add very high levels of hydrophobe is a special property of aminoplast chemistry, and it allows the production of associative thickeners that resist viscosity loss when glycols or surfactants are added to coatings, as happens during tinting of paints with concentrated colorants.

Another class of organic or organically modified associative polymers that can be used in the present invention is the class known as HMPE - standing for Hydrophobically Modified Polyether.

Another class of organic or organically modified associative polymers that can be used in the present invention is the class known as HMHEC - standing for Hydrophobically Modified Hydroxy Ethyl Cellulose. These have a hydrophobe modification on some branches - several long chain alkyl blocks or groups have been introduced along the backbone of the structure. These molecules build viscosity by association of the various hydrophobic blocks or groups. HMHEC thickeners can be made by the addition of long chain alkyl epoxides to hydroxyethyl celluloses of the type used as non-associative thickeners. Related Hydrophobically Modified Hydroxy Alkyl Cellulose thickeners may be prepared, if wished, by using a hydroxyalkyl cellulose other than hydroxyethyl cellulose.

Another class of organic or organically modified associative polymers that can be used in the present invention is the class known as styrene-maleic anhydride terpolymers (SMAT).

Another class of organic or organically modified associative polymers that can be used in the present invention is the class of hydrophobically modified polyacrylamide type in which the hydrophobic blocks or groups are incorporated as free radical copolymers with N-alkyl acrylamides. Such a thickener may be an aqueous solution of a water soluble, nonionic or anionic vinyl addition copolymer of, by weight, at least 50% acrylamide, 0.01 to 50%, an N-substituted acrylamide and, optionally up to 49.99% other vinyl monomers. The substituent on the nitrogen of acrylamide is hydrocarbyl and has 6 or more carbon atoms or is such a hydrocarbyl group attached to the nitrogen via a polyoxyalkylene chain. The GPC weight average molecular weight of the copolymer is greater than 30,000 but less than 2 million.

The polyacrylamide associative thickener may be a copolymer of acrylamide and one or more N-substituted acrylamides. The copolymer may be a copolymer of these acrylamides and other vinyl monomers, such as hydrophilic, such as hydroxypropyl acrylate, hydroxyethyl methacrylate, hydroxyethyl acrylate, methacrylic acid, acrylic acid, or even N-vinylpyrrolidone. Ionic acrylamide copolymers are made by copolymerization with ionizable monomers, such as methacrylic acid, acrylic acid and itaconic acid. Nonionic copolymers are prepared employing N-vinylpyrrolidone or the hydroxyalkyl acrylates or methacrylates or hydroxy-, alkoxy-, or polyalkoxyalkyl acrylates and methacrylates, the alkyl groups in these compounds such as having 2 to 4 carbon atoms or even 2 or 3, i.e., being ethoxy or propoxy materials.

Nonionic acrylamide co-polymers are also associative thickeners which may be used and are described in US4395524, at column 3.

Any of the abovementioned organic or organically modified associative thickeners may be used in the present invention. The organic or organically modified associative thickeners may comprise HASE thickeners and/or HEUR thickeners.

It should be noted that the terms blocks, segments and group are all used herein in relation to hydrophilic and hydrophobic moieties. This does not indicate substantive differences but rather, custom and usage. For example 'groups' tends to be used in the art for smaller hydrophilic and hydrophobic units than 'segment' or 'block' but there is not a clear separation of the terms.

Molecular weight values stated in this specification are weight average molecular weight, determined by Gel Permeation Photography, unless otherwise stated.

As noted herein an organic or organically-modified non-associative thickener need not be present, but may present in an amount of up to the weight of the organic or organically-modified associative thickener, in the liquid.

An organic or organically-modified non-associative thickener may be of any available type. Examples include cellulose ethers, acrylic thickeners, starch based thickener, gums, organically modified clays, modified ethylene vinyl acetate (EVA), and zirconium, acetate lactate oxo ammonium complexes.

Examples of suitable cellulose ethers are hydroxyethyl cellulose, hydroxylpropyl cellulose hydroxypropyl methyl cellulose, carboxymethyl cellulose, ethyl hydroxyethyl cellulose, methyl hydroxyethyl cellulose, methylcellulose and ethylcellulose.

Examples of suitable acrylic thickeners are ACRYSOL ASE-60 (commercially available from DOW), RHEOVIS AS 1130 (commercially available from BASF), VISCOATEX 46 (commercially available from Arkema), and RHEOLATE 125 (commercially available from Elementis).

An example of a starch-based thickener is EMCOL KP 45 K (commercially available from Emsland Group).

Examples of suitable gums as thickeners are OPTIXAN (commercially available from Archer Daniels Midland Co), KELZAN S (commercially available from CP Kelco), BETOLIN V 30 (commercially available from Wöllner GmbH), and AGOCEL V 600 30 (commercially available from CHT/Bezema group).

Organically modified clays (organoclays) which can be used as thickeners are organically modified phyllosilicates, derived from naturally occurring clay minerals. Typically the organic modification is by exchanging the original interlayer cations for organocations (typically quaternary alkylammonium ions), thereby generating an organophilic surface consisting of electrostatically linked organic moieties. The lamellar structure remains analogous to the parent phyllosilicate. Examples include organically modified hectorite clay, organically modified bentonite clay, and organically modified smectite clay. Specific examples of organically modified clays are BENTONE LT (commercially available from Elementis) and OPTIGEL WM LT (commercially available from Byk).

Coating compositions may contain:
- pigment - pigments impart colour and opacity
- extender - substance in granular or powder form, insoluble in the coating composition and used to modify certain physical properties. Typically of low refractive index
- solvent - such as water in this invention, optionally with low amounts of organic solvents
- additives - used to modify the properties of the liquid paint or dry film
- binders (resins)

The binder (resin) and solvent together are sometimes known as the vehicle. The binder may be dissolved as a solution or carried as a dispersion of microscopically small particles in a liquid.

Depending on the type of paint and intended use, additives may include:
- dispersants - to separate and stabilise pigment particles
- silicones - to improve weather resistance
- thixotropic agents - to give paints a jelly-like consistency that breaks down to a liquid when stirred or when a brush is dipped into it
- driers - to accelerate drying time
- anti-settling agents - to prevent pigment settling
- bactericides - to preserve water based paints in the can
- fungicides and algaecides - to protect exterior paint films against disfigurement from moulds, algae and lichen

Binders (resins) used in water-based liquid coatings may comprise:
- acrylic polymers
- alkyd polymers
- polyurethane polymers
- polyurethane-modified alkyd polymers
- polyurethane - acrylic copolymers
- styrene - acrylic copolymers
- vinyl acetate - acrylic copolymers
- vinyl acetate - maleate copolymers
- vinyl acetate - ethylene copolymers
- vinyl versatate - vinyl acetate copolymers
- vinyl versatate - acrylic copolymers

The main types of emulsion polymers employed in formulating water-based liquid coatings, for example latex paints, are pure acrylic emulsion polymers, comprising of alkyl esters of acrylic and methacrylic acid, or combinations of such esters with vinyl aromatic co-monomers, for example styrene, vinyl acetate or vinyl versatate.

In addition to copolymers of vinyl acetate and acrylic monomers, more copolymers of acrylic esters are possible for use in aqueous paints such as styrene, vinyl versatate, fumaric acid, crotonic acid, maleic acid, itaconic acid, acrylamide, acrylonitrile, N-methylol acrylamide and fluoromonomers including vinylidene fluoride (VDF) and hexafluoropropylene (HFP).

An alkyd resin suitable for use in an emulsion may be formed by adding surfactants, anionic and/or nonionic, to molten alkyd resin and then adding water under shear. An alkyd emulsion contains very little to no organic solvent, inverting from a water-in-oil to an oil-in-water mixture. Typically 5-10% surfactant levels are used to form an alkyd emulsion.

Another type of alkyd resin is made by polymerising a high-Tg acrylic shell around an alkyd core; this technology is referred to as core shell alkyd dispersion. During manufacturing, a low-molecular-weight alkyd is copolymerized with a high-Tg, hydrolysis-resistant acrylic monomer, grafting the acrylic to the alkyd. Acid functionality is built into the acrylic shell, which is then salted with an amine to make the acrylic-modified alkyd water dispersible. The acrylic shell surrounds the alkyd, protecting it from hydrolysis, making the core shell hybrid dispersion more shelf stable than a typical water-reducible alkyd. This core shell hybrid dispersion has faster dry times than an alkyd emulsion due to the high-Tg acrylic shell.

A further type of aqueous alkyd resins are the PU-modified alkyd emulsions. The technology of PU-modified alkyd emulsions is based the incorporation of carboxyl groups into the resin followed by neutralization of the resin with amines or hydroxides and emulsification in water. No external emulsifiers and no co-solvents are needed to obtain stable resin emulsions.

### Pigments used in paints

Pigments give colour and opacity to paints. The organic pigments may comprise azo-, phthalocyanine, diketo-pyrrolo-pyrrole, quinacridone and anthraquinone derivatives.

The most common inorganic pigment is white titanium dioxide (titanium(IV) oxide) which provides over 70% of total pigments used (Unit 51). It has a high refractive index and gives opacity to the paint. Other inorganic pigments include iron oxides (black, yellow and red), zinc oxide and carbon black.

Powdered metals such as zinc and some metal compounds, for example zinc phosphate, have corrosion inhibiting properties. Another widely used inorganic pigment is finely divided calcium carbonate. This has a low refractive index and can be used, together with titanium dioxide, to produce 'matt' paints. Because of its low refractive index calcium carbonate may also be considered as an extender.

### Paint drying

As the paint dries, a film is formed which adheres to the surface of the material to which it is being applied.

Emulsion paints dry by a physical process involving the evaporation of water followed by coalescence of the polymer droplets and their subsequent integration into a hard polymer matrix that acts as a binder for the pigment.

On applying gloss paints, the alkyd polymer cross-links by an oxidation reaction with oxygen in the air once the solvent has largely evaporated. This reaction is accelerated using salts of transition metals (for example, cobalt, iron and manganese carboxylates). The transition metal ion (with variable oxidation state) catalyses the oxidation and cross linking of the polymer chains, producing a hard surface film to the paint.

Features, including optional features, of a spray apparatus as defined herein are optional features of a method or kit. Features, including optional features, of a method as defined herein are optional features of a liquid spray apparatus or kit. Features, including optional features, of a kit as defined herein are optional features of a liquid spray apparatus or method.

All of the features disclosed herein may be combined in any combination.

### BRIEF DESCRIPTION OF DRAWINGS

For a better understanding of the invention, and to show how example embodiments may be carried into effect, reference will now be made to the accompanying drawings in which:
Fig. 1 shows a perspective view of a user spraying a surface with a first embodiment of a spray assembly, wherein a support structure of the spray assembly is floor-standing and not wearable on the user;
Fig. 2 shows a cross-sectional view of the liquid reservoir of Fig. 1;
Fig. 3 shows a perspective view of the support structure of Fig. 1 wherein a hatch of the support structure is in an open position for accessing a reservoir provided as a cartridge housed by the support structure;
Fig. 4 shows the support structure of Fig. 3 alternatively housing a second cartridge of relatively smaller volume than the cartridge shown in Fig. 3 wherein the hatch is in a closed position;
Fig. 5 shows the main unit of Fig. 3 wherein the support structure comprises a control unit which is attachable to a receptacle holding part of the support structure;
Fig. 6 shows a second embodiment of the spray assembly, wherein a support structure of the second embodiment comprises a floor contacting part comprising wheels;
Fig. 7 shows a receptacle holding part of the support structure of the second embodiment for housing a plurality of cartridges;
Fig. 8 shows a control unit of the second embodiment attached to a user;
Fig. 9 shows a third embodiment of the spray assembly , wherein a support structure and a control unit are wearable on a user, wherein a gas pressuring device is floor-standing and not wearable on the user;
Fig. 10 shows a fourth embodiment of the spray assembly , wherein a support structure and an gas pressurising device powered by an energy storage unit are wearable on a user;
Fig. 11 shows the support structure and gas pressurising device of Fig. 10;
Fig. 12 shows alternative embodiments of the support structure;
Fig. 13 shows a control unit of the fourth embodiment;
Fig. 14 shows a flow chart of a method of using a liquid spray assembly which comprises a liquid spray apparatus and a liquid;
Fig. 15 is a perspective view of a fifth example of spray assembly;
Fig. 16 is an enlarged perspective view of an upper rear portion of the support structure of structure of the spray assembly of Fig. 15;
Fig. 17 is an enlarged perspective view of a lower side portion of the support structure of the spray assembly of Fig. 15 and 16; and
Fig. 18 is a perspective view of the spray assembly of Fig. 15-17 with its reservoir access hatch open;
Fig. 19 shows a backpack mounting board of the spray assembly of Fig. 15-18;
Fig, 20 shows a spray applicator suitable for use in the invention in a frontal perspective view;
Fig. 21 shows the spray applicator of Fig. 20 in frontal elevation.

### DESCRIPTION OF EXEMPLARY EMBODIMENTS OF THE SPRAY ASSEMBLY

At least some of the following example embodiments provide an improved liquid spray assembly, method of using a liquid spray assembly and a kit of parts for a liquid spray assembly. The example assemblies are simple and convenient for the user. Additionally, the effect of splashback and overspray is reduced. Other advantages and improvements will be discussed in more detail herein.

Such spray assemblies comprise liquid spray apparatus and a coating liquid to be sprayed onto a surface.

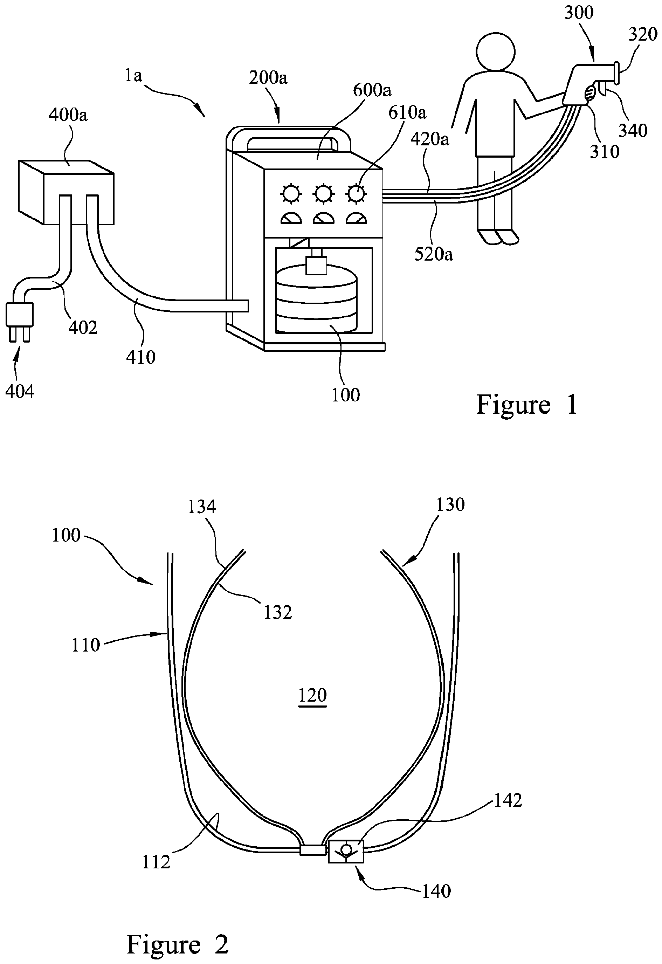

A spray assembly 1a according to a first embodiment is shown in Figure 1. The spray assembly comprises a receptacle 100 for containing liquid to be sprayed onto a surface. The receptacle is shown as a bottle in the form of a cartridge. Using a cartridge is advantageous because the liquid can be easily changed, particularly when the liquid remaining in the receptacle is low. The cartridge may comprise a tamper-proofing means (not shown). The tamper-proofing means may be disturbed when inserting the cartridge. Alternatively, the tamper-proofing means may be removed manually by a user before inserting the cartridge. In Figure 1, a cylindrical receptacle is shown. The capacity of the receptacle is 4 litres, although a 2 litre receptacle can be equally used. Advantageously, the apparatus is capable of holding cartridges of varying capacity and/or size.

The receptacle 100 shown in Figure 1 is installed in a support structure 200a. The support structure is a floor-standing support structure. That is, the support structure has a predetermined resting position. The resting position equates to a vertical orientation of the receptacle when installed in the support structure.

The spray assembly 1a further comprises a spray applicator 300 that is holdable by the hand of the user. The spray applicator is a spray gun. The spray gun comprises a trigger 340 for activating the release of the liquid away from a liquid outlet valve (not shown) of the spray gun. The trigger may be biased towards a first position that is a non-activating position. The biasing means may be a resilient member such as a spring. The spray gun has a liquid outlet 320 that is arranged at an opposite end to a liquid inlet 310.

The spray assembly 1a comprises a source of pressurised gas 400a. In this example the gas is air, and the source of compressed gas is an air compressor. The compressor supplies the receptacle 100 with air pressure so that the liquid can be driven out of the receptacle and towards the spray applicator 300. The compressor is shown to be powered by mains electricity and comprises an electrical connector 404 that supplies electricity through an electrical cable 402. However the compressor may be powered by a battery rather than mains electricity. Alternatively the air pressurising device may be a canister of pressurised air. The canister is advantageous because it is portable and can be easily used outside without the risk of electrical shock.

The spray assembly 1a is further shown with transmission lines 410, 420a, 520a. The transmission lines are hoses that convey air or liquid around the spray assembly. For example, a first air transmission line 410 provides fluid communication between the compressor and the receptacle 100. A second air transmission line 420a and a first liquid transmission line 520a fluidly link the receptacle and the spray applicator 300. A three-way connector may separate the first and second air transmission lines so that air supplied under pressure from the compressor is diverted from the first air transmission line towards the receptacle to drive a displacement member 130 of the receptacle and force liquid out of the receptacle. Second air transmission line 420a is divided into two separate sub-lines prior to entry into the spray applicator so as to provide separate primary and secondary air flows within the spray applicator.

Finally, a control unit 600a with control dials 610a is shown that is attached to the support structure 200a. Although three control dials are shown, at least one control dial may be used to simplify the options for adjustment. The control unit is removable from the support structure. That is, the control unit can be coupled and decoupled to the support structure. This allows the control unit to be removed for maintenance, repair or update.

The receptacle 100 is shown in cross-section in Figure 2. The receptacle comprises a main body 110 that is an outer part of the receptacle. The main body may be made from metal. The receptacle further comprises a displacement member 130 that is provided as a bladder. The displacement member is configured to expand and contract as liquid fills and leaves (through a liquid outlet (not shown) of) a reservoir 120, respectively. In the example shown, the receptacle is provided by the displacement member alone and not the main body. However, the reservoir 120 may alternatively be formed by the main body and the displacement member, for example, if the displacement member is provided as a piston. The displacement member therefore has a air contacting side 134 and a liquid contacting side 132. The main body also has a air contacting side 112 that comes into contact with the displacement member. To allow the displacement member to move freely away from the air contacting side of the main body, the air contacting side comprises a coating that is a non-stick coating to avoid the adhesion of the displacement member to the main body.

Figure 2 further shows an air inlet 140. The air inlet allows air to enter the receptacle 100 from the compressor. The air contacts the air contacting side 112 of the main body 110 and the air contacting side 134 of the displacement member 130 to force the displacement member to move. In the example shown, the displacement member is a bladder and comprises a flexible membrane allowing the displacement member to be manipulated so that the displacement member can expand and contract by air pressure. The air inlet comprises a one-way valve 142 for restricting air flow and preventing air flow out of the receptacle. This prevents the reservoir 120 being filled without circumventing (i.e. overcoming) the one-way valve because the displacement member is prevented from expanding when liquid enters the reservoir. Advantageously, the cartridge may not be refillable by the user without a special tool to open the one-way valve.

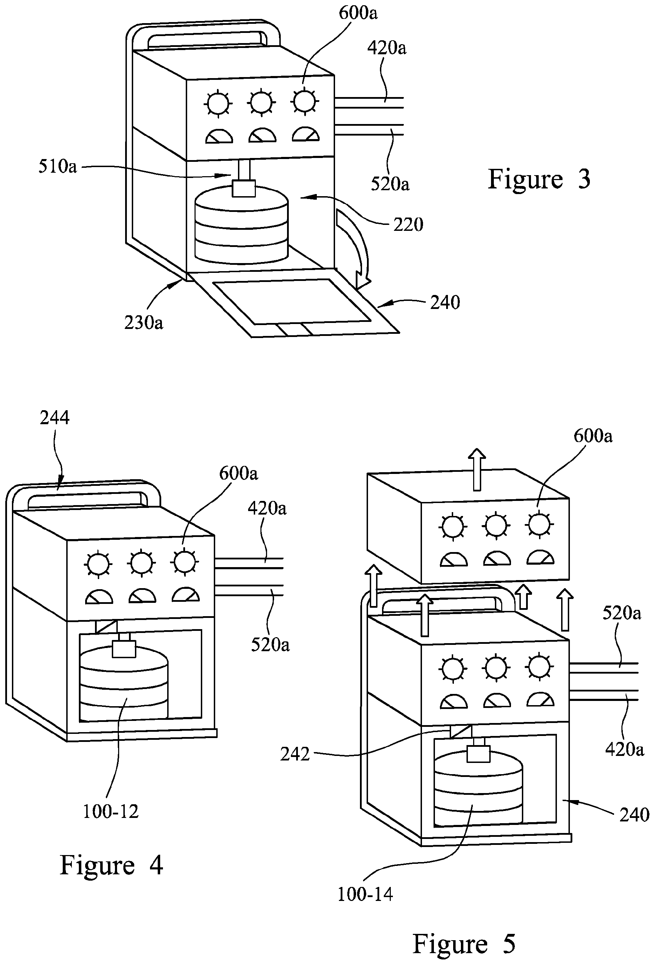

The support structure 200a of the first embodiment is shown in more detail in Figures 3 to 5. As previously mentioned, the support structure is shown with a removable control unit 600a that regulates the flow of air and/or liquid of the spray assembly 1a. Transmissions lines 420a, 520a are shown to transport the air and liquid around the system, towards the spray applicator. Furthermore, a 2 litre cartridge 100-12 and a 4 litre cartridge 100-14 are shown. The support structure comprises a handle 244 for ease of transportation. The cartridge is removed by opening a door 240, shown as a hatch. The door may comprise a window for visual inspection of the inside of the support structure. The door comprises an opening means 242. The opening means may be a handle. However, the opening means may be a button to release the hatch. The door is hinged to allow the door to pivot and provide an opening through which to pass the receptacle 100. The support structure 200a comprises an accommodating part 220 for receiving the receptacle (i.e. housing the receptacle) and a ground contacting part 230a for abutment against a ground surface. The accommodating part is therefore a receptacle holding part 220. A further liquid transmission line 510a is shown that is arranged to convey liquid from the receptacle to the control unit.

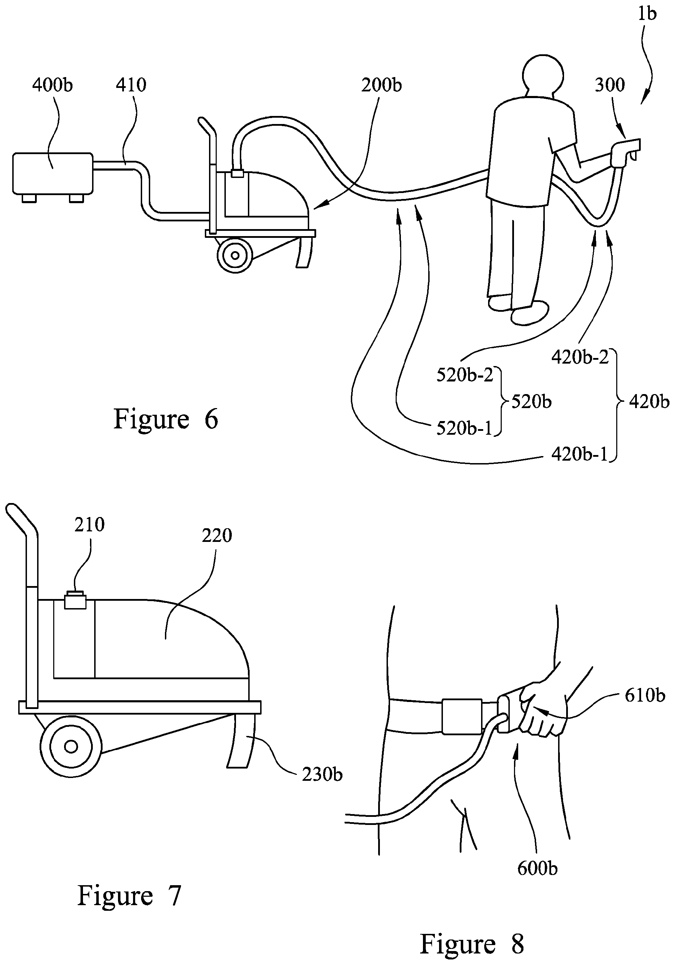

A spray assembly 1b according to a second embodiment is shown in Figure 6. The spray assembly of the second embodiment differs from the spray assembly 1a of the first embodiment in that the air pressurising device 400b is powered by liquid fuel, such as diesel or airoline, the support structure 200b is arranged in the form of a trolley and the control unit 600b (see Figure 8) is wearable on the user.

A first air transmission line 410 connects the air pressurising device 400b and the support structure 200b. Although not shown, a first liquid transmission line 510b is connected between a liquid outlet portion of the reservoir 120 and a connecting member 210 shown in Figure 7. A second liquid transmission line 520b is configured to transmit liquid away from the connecting member and towards the liquid inlet 310 of the spray applicator 300. Similarly, a second air transmission line 420b is configured to transmit air from the connecting member and towards the spray applicator to propel liquid out of the liquid outlet valve of the spray applicator. Both the second liquid transmission line and the second air transmission line comprise a pair of transmission sub-lines. A first air transmission sub-line 420b-1 is connected upstream of the control unit 600b and a second air transmission sub-line 420b-2 is connected downstream of the control unit. Likewise, a first liquid transmission sub-line 520b-1 is connected upstream of the control unit and a second liquid transmission sub-line 520b-2 is connected downstream of the control unit. A control dial 610b is used to control the passage of liquid and/or air. Second air transmission line 420b is divided into two separate sub-lines prior to entry into the spray applicator so as to provide separate primary and secondary air flows within the spray applicator.

The support structure 200b comprises a telescopic handle for ease of storage. The support structure comprises a receptacle holding part 220 (i.e. an accommodating part) and a ground contacting part 230b. Unlike the support structure 220a of the first embodiment, the support structure of the second embodiment is capable of holding a plurality of receptacles 100 at once. Each receptacle may be a different size as shown in Figure 7. The receptacle holding part comprises a door that allows access to the inside of the receptacle holding part (i.e. the region accommodating the at least one receptacle). The door does not comprise a window. The ground contacting part comprises a plurality of wheels. The wheels may be connected by a common axle. Alternatively, the wheels may rotate independently and therefore have separate axles. The ground contacting part further comprises a foot provided away from the wheels. The foot does not move relative to the receptacle holding part but is configured to rest against a ground surface when the support structure is in a standing position.

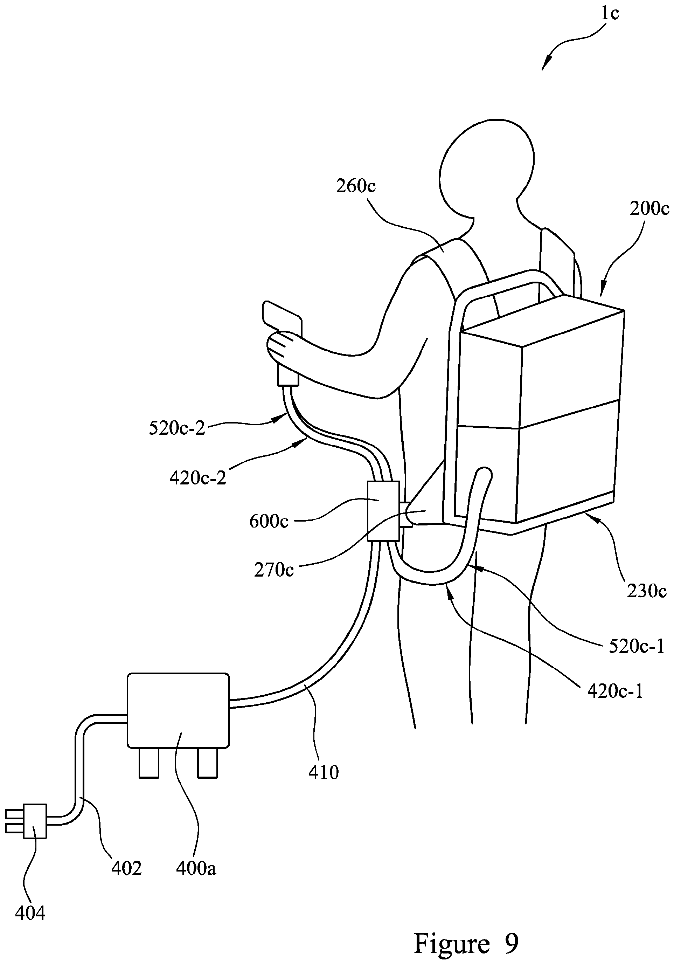

A spray assembly 1c according to a third embodiment is shown in Figure 9. The spray assembly differs from the spray assembly 1a of the first embodiment in that the support structure 200c and control unit 600c are both wearable on a user (the support structure comprises a ground contacting part 230c for resting the support structure on ground in a resting position). The support structure is worn by the user using shoulder straps 260c and the control unit is worn using a belt 270c. The air pressurising device 400a of the first embodiment is shown. However, the air pressurising device 400b of the second embodiment can equally be used. The air pressurising device is powered by mains electricity and comprises an electrical connector 404 that supplies electricity through an electrical cable 402.

The first air transmission line 410 of the third embodiment is connected between the air pressurising device 400a and the control unit 600c. The control unit therefore acts as a hub about which the network of transmission lines is arranged. A second air transmission line 420c comprises a first air transmission sub-line 420c-1 which transmits air towards the receptacle 100 and a second air transmission sub-line 420c-2 transmits air towards the spray applicator 300. Additionally, a first liquid transmission line 520c comprises a first liquid transmission sub-line 520c-1 which transmits liquid rom the receptacle 100 to the control unit and a second liquid transmission sub-line 520c-2 transmits liquid from the control unit to the spray applicator. Therefore, the first and second liquid transmission sub-lines flow in and out of the control unit whereas the first and second air transmission sub-lines both flow out of the control unit since the first air transmission line supplies the control unit with air from the air pressurising device. Second air transmission line 420c is divided into two separate sub-lines prior to entry into the spray applicator so as to provide separate primary and secondary air flows within the spray applicator.

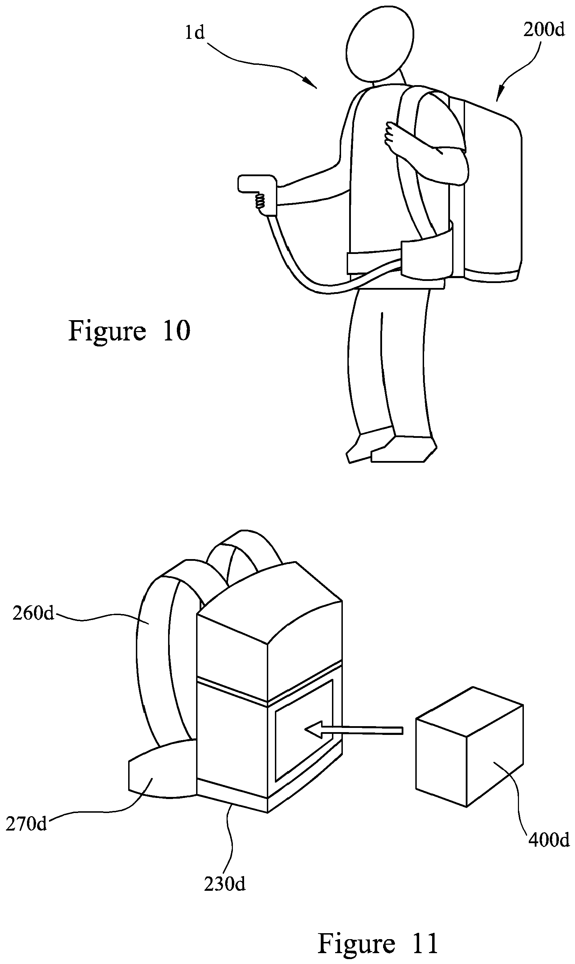

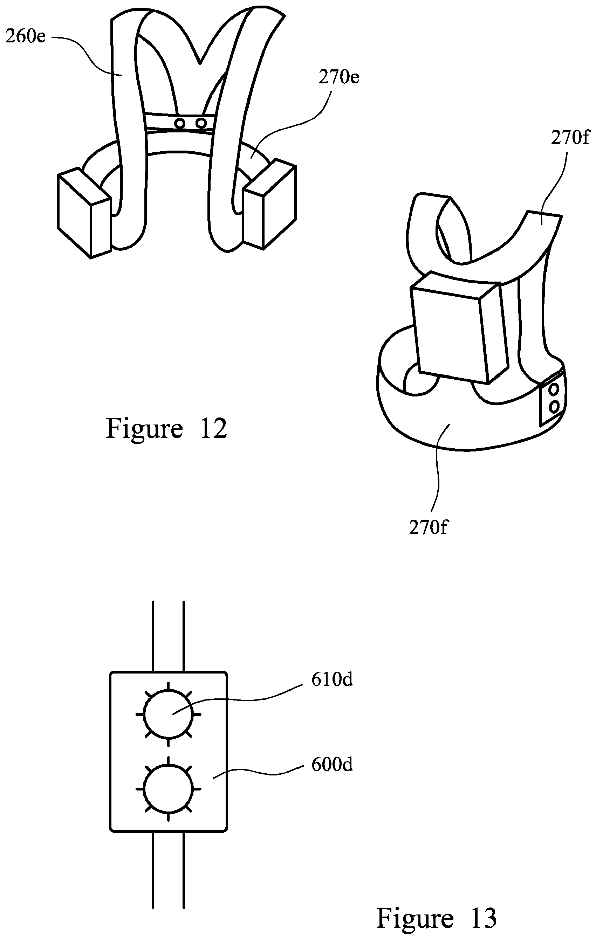

Finally, a spray assembly 1d according to a fourth embodiment is shown in Figure 10. The spray assembly of the fourth embodiment is similar to the spray assembly 1c of the third embodiment in that the support structure 200d and control unit 600d (including at least one control dial 610d as shown in Figure 13) are both wearable on a user. The support structure is provided as a backpack. The backpack includes shoulder straps 260d and a belt 270d. The air pressurising device 400d of the fourth embodiment is powered by a battery. This allows the spray assembly to be portable and the air pressurising device can be carried by the user. The support structure comprises a plurality of compartments, each for the receptacle and the air pressurising device with battery. A lower compartment is the ground contacting part 230d. The air transmission line to the spray applicator is divided into two separate sub-lines prior to entry into the spray applicator so as to provide separate primary and secondary air flows within the spray applicator.

Figure 12 shows two variations of the shoulder straps 260e, 260f and belt 270e, 270f combination of Figures 9 and 10. These variations comprise holders for further receptacles 100 or generally pockets for storing other items of use. The shoulder straps and belt are comfortable and convenient for a user.

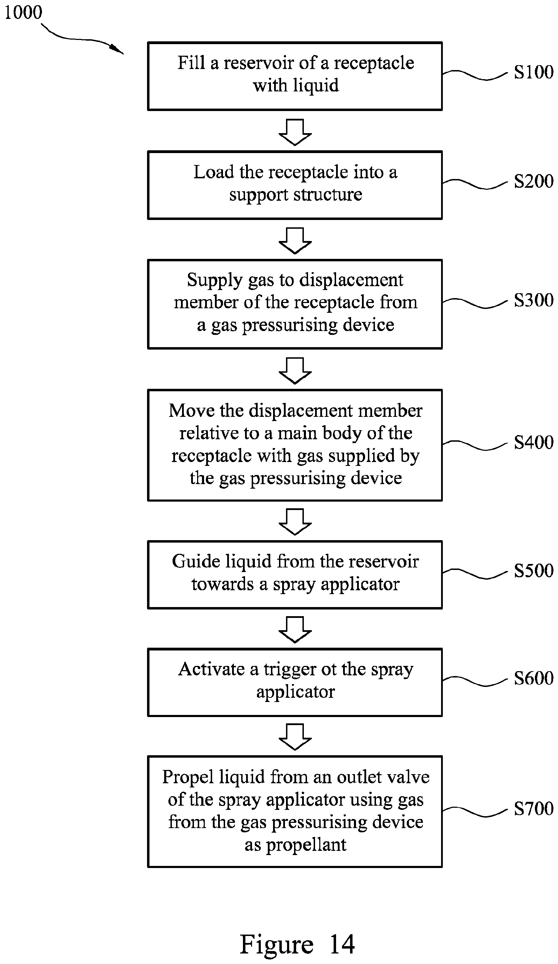

Figure 14 shows a method 1000 of using a liquid spray assembly. The method includes filling the receptacle with liquid (S100), such as a coating composition such as a paint or varnish. The filling step may be performed using a one-way valve so that an end-user cannot easily re-fill the receptacle because the one-way valve may require a special tool to overcome. Once the receptacle is filled, the receptacle can be loaded into a support structure (S200). When the receptacle comprises a tamper-proofing means, the step of loading the receptacle may disturb the tamper-proofing means and allow the liquid to be released from the receptacle. Once the receptacle is loaded, air is supplied to a displacement member of the receptacle from a source of pressurised air (S300). The source of pressurised air may be a compressor and the air may be air. The supply of air under pressure results in the movement of the displacement member relative to a main body of the receptacle (S400). The displacement member therefore acts as a bladder and expands and contracts under pressure. As a result of the movement of the displacement member, liquid is guided from the reservoir towards a spray applicator (S500). To release the liquid from the spray assembly, a trigger on the spray applicator is activated (S600), such as by hand. The liquid is then expelled from an outlet valve of the spray applicator using air from the source of pressurised air as a propellant (S700). The liquid can be directed to a surface to be coated. Once a liquid level in the receptacle is sufficiently low, the receptacle can be replaced. Therefore, it is convenient if the receptacle is a cartridge so that the receptacle can be swapped with ease. Separately, air is fed to the spray applicator to modify the expelled liquid, as will be described in more detail.

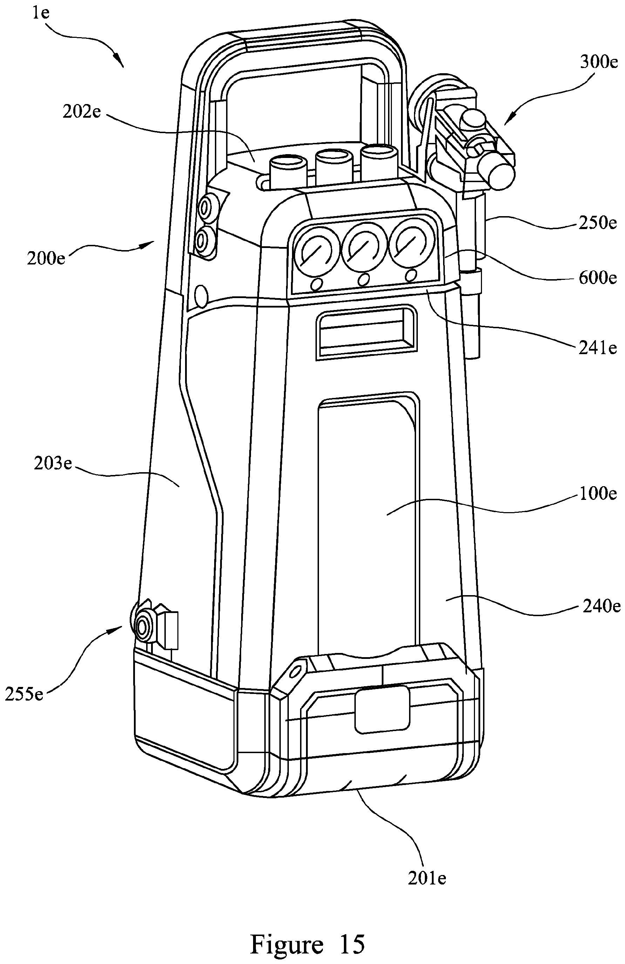

A further example of a liquid spray assembly 1e is shown in Figures 15-19. The liquid spray assembly 1e corresponds largely in structure and function to the liquid spray assemblies 1a-1d described herein, and therefore only the differences will be discussed in detail. Furthermore, Figures 15-19 omit the transmission lines and air pressurising device so as to facilitate an unobstructed view of the features of the liquid spray assembly 1e.

As can be best seen in Figures 15-18, liquid spray assembly 1e comprises a support structure 200e, configured to retain a receptacle 100e. Similarly to the support structure 200a, the support structure 200e takes the form of a generally cuboid structure, albeit with the base 201e of the support structure 200e having a larger surface area than the top 202e. The generally vertical sidewalls 203e of the support structure 200e have a longer vertical extent than the horizontal extent of the top 202e and bottom 201e, so that the support structure 200e has a generally "portrait" orientation when viewed from the front or side. Similarly to the support structure 200d, the support structure 200e is configured so that it can be either worn on the back of the user or rested on the floor or another support surface in use. In other words, the support structure 200e is operable in two configurations, a worn configuration and a floor-resting configuration.

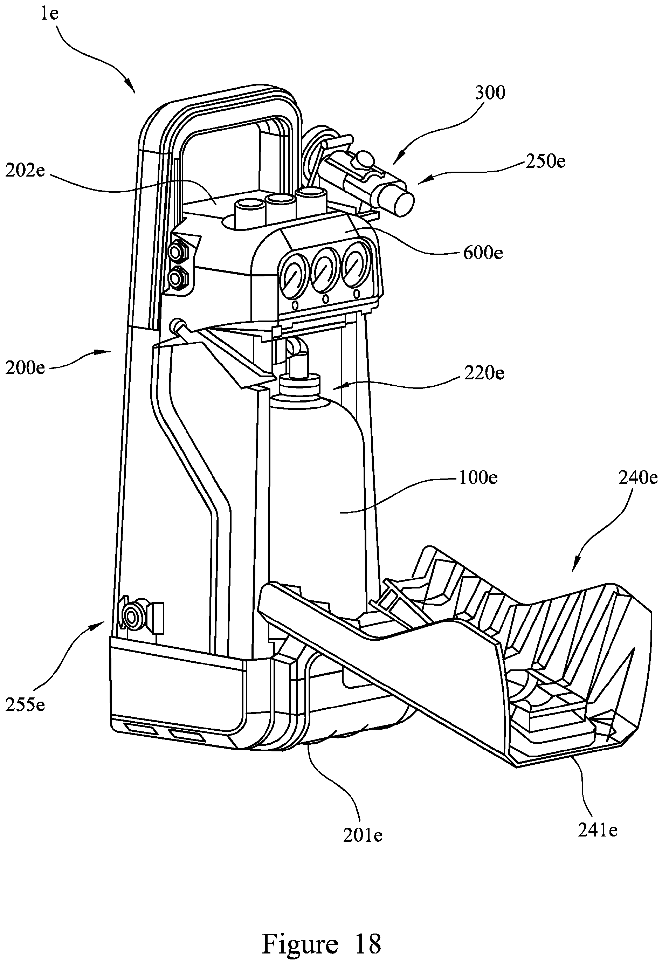

The support structure 200e defines a housing or enclosure that has an internal volume that accommodates the receptacle 100e. This enclosure is accessible by opening the door 240e. As can be best seen in Figure 18, the door 240e is pivotally attached to the support structure 200e towards the base 201e, so that the upper edge 241e of door 240e can move away from and forward of the support structure 200e.

The internal volume of the support structure 200e comprises an accommodating part 220e that is configured to retain the receptacle 100e. The accommodating part 220e is shaped to engage with the receptacle 100e so as to hold it securely in position during operation of the spray assembly 1e. For example, the accommodating part 200e may take the form of recess having a shape that is at least partially complementary to the shape of the receptacle 100e, so as to securely engage the main body of the receptacle 100e.

It will be appreciated that the recess may not exactly correspond to the shape of the receptacle 100e - for example the recess may be able to accommodate expansion of the receptacle 100e in use. Furthermore, it will be appreciated that in some examples the accommodating part 200e comprises elements on the interior surface of the door 240e that are configured to engage with the receptacle 100e when the door 240e is closed.

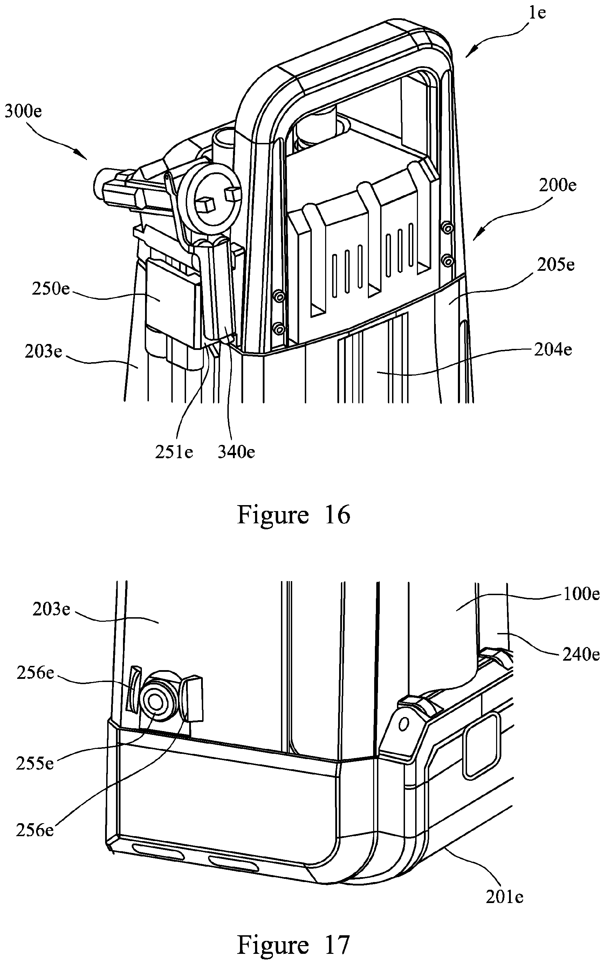

In one example, the support structure 200e comprises a spray applicator holder 250e, configured to retain the spray applicator 300e when not in use. The spray applicator holder 250e is located at an upper portion of one of the sidewalls 203e. Furthermore, the holder 250e comprises a stop member 251e (best seen in Figure 16), which prevents activation of the trigger 340e of the spray applicator 300e, when the spray applicator is in the holder 250e. For example, stop member 251e is a projection that extends between the trigger 340e and a handle 330e of the spray applicator 300e. Accordingly, the stop member 251e prevents the trigger 340e being depressed towards the handle 330e, thereby preventing activation of the trigger 340e.

In one example, the spray assembly 1e comprises an emergency cut off button 255e, which is shown in detail in Figure 17. For example, the emergency cut off button 255e is disposed at a lower portion of one of the sidewalls 203e. Accordingly, when the support structure 200e is worn on the back of the user, the user can easily reach the button 255e to activate it. The emergency cut off button 255e is configured to cut off the air supply received from the air pressurising device 400 upon activation of the button, for example by activating a shut-off valve. Consequently, liquid will no longer be forced out of the receptacle 100e, and the spray applicator 300e will no longer propel the liquid therefrom.

In one example, a guard portion is positioned around the emergency cut off button 255e. The guard portion extends further from the sidewall 203 than the button 255e, so as to prevent accidental activation of the button 255e. In one example, the guard portion takes the form of a pair of projections 256e arranged at opposite sides of the button 255e.

In the structure of Figs. 17 and 18 the receptacle 100e takes the form of a generally cylindrical main body, with a domed top portion. A neck is formed at the peak of domed top portion, wherein the neck forms the liquid outlet of the receptacle 100e.

The bottom end, which is disposed at the opposite end of the main body to the top portion, comprises the air inlet 140e. The air inlet is arranged on the underside of the receptacle 100e.

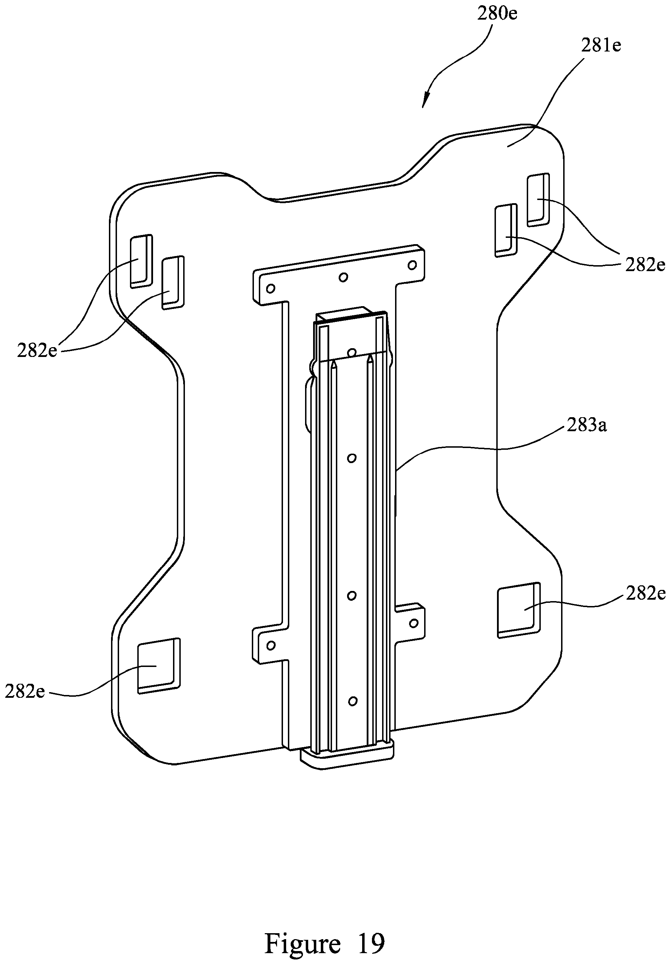

Turning now to Figure 19, there is shown an exemplary backpack mounting unit 280e. The backpack mounting unit 280e comprises a board 281e having a plurality of apertures 282e, which are configured to retain suitable shoulder and hip straps (not shown). The backpack mounting unit 280e is connectable to the rear of the support structure 200e, for example via mounting rail 283e, which is slidably engageable in a corresponding recess 204e disposed on a rear side wall 205e of the support structure 200e. This allows the support structure 200e to be rapidly converted from a floor standing support structure to a wearable support structure.

Whilst the liquid stored in the receptacle 100 described above may be a liquid for coating a surface, it will be appreciated that a receptacle 100 comprising a cleaning solution for cleaning the spray apparatus 1 may also be supplied. Particularly, some liquids used by the spray apparatus 1 may dry and set in the liquid transmissions lines of the apparatus when the apparatus is stored between uses. Accordingly, a receptacle 100 comprising a cleaning solution may be received in the apparatus 1, such that the cleaning solution may be drawn through the apparatus 1 in order to flush the apparatus 1.

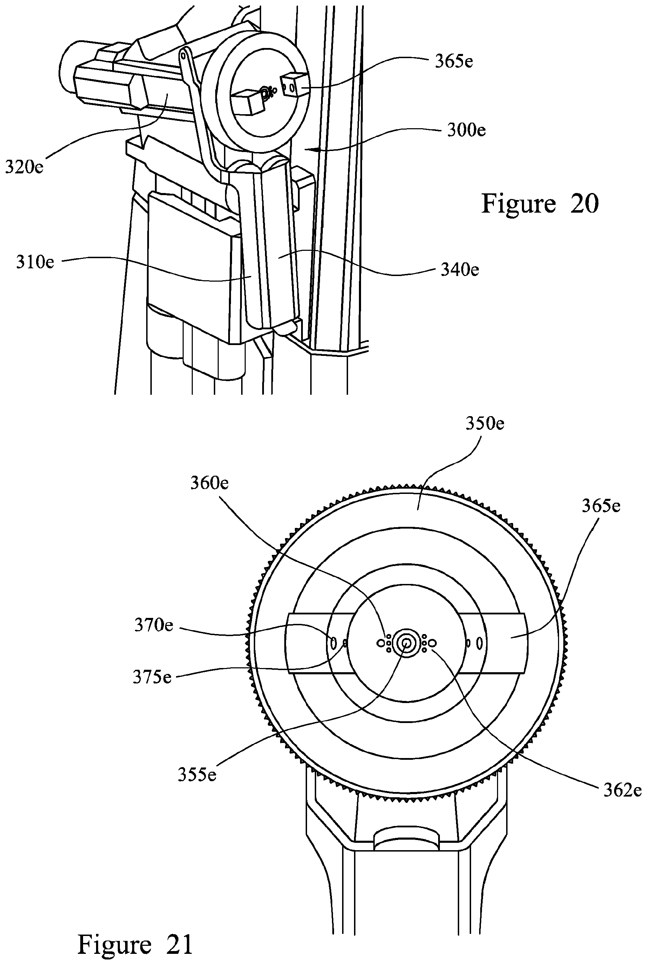

It can be seen in Figs. 20 and 21 that the spray applicator 300e has a generally circular spray head. Liquid is sprayed forwardly from the spray head, in use. The spray head has two projections or 'horns' 365e projecting from the generally circular face of the spray head. The horns are spaced apart in diametrically opposed positions. The spray applicator, which can be used with any of the embodiments herein, will be described in greater detail, with reference to Figs. 20 and 21.

The spray applicator 300e is generally of pistol design having a pistol-type grip handle 310e and a barrel 320e transverse to the handle. The handle is provided with a spring-biased trigger 340e which is depressed in order to permit liquid to be released. The distal or outlet end of the barrel - the spray head - has openings for the expulsion of liquid and air.

Thus in the generally circular face 350e of the spray head of the barrel there is provided an outlet in the form of a single central nozzle 355e for liquid. In close proximity to the nozzle are two clusters 360e, 362e of openings for primary (atomising) air. They are arranged diametrically to each other. One cluster 360e is on one side of the nozzle. The other cluster 362e is on the other side of the nozzle. Each cluster comprises three smaller holes adjacent to the nozzle and one larger hole located further from the nozzle. The openings 360e, 362e and nozzle 355e are coplanar and as soon at the liquid is expelled from the nozzle it is swept up by the primary air issuing from openings 360e, 362e, and atomised. The atomised output is initially conical and divergent but it is altered by a further delivery of air, from the air horns 365e. It will be seen that the air horns are two blocks projecting forwardly of the generally circular face of the spray head, and diametrically opposed to each other. The inner and outer faces of each air horn are convex and follow the circular shape of the spray head. The inner face of each air horn has two apertures; a smaller one nearer to the face 350e and the larger one further from the face 350e. Thus the two air horns together have two air outlets each and from those outlets air is expelled in opposing directions, towards the conical spray, and transverse to it. This has the effect to modifying the spray into an elliptical or fan shape.

It should be noted that the flow of liquid is separate from the flow of primary and secondary air within the spray applicator. The liquid is separate until the primary air atomises the liquid as it leaves the nozzle. The secondary air is delivered to the mixture of liquid and primary air subsequently.

The spray applicator has entirely separate conduits for the primary and secondary air.

When the trigger is released by the operator it is moved by a spring to its rest position (its off position, and its outmost position). This action closes the conduit for liquid, and the two conduits which separately deliver primary air (for atomising), and secondary air (for deflecting).

The spray applicator may be designed such that the initial depression of the trigger permits air release - such as both primary air and secondary air - but no release of liquid. Further depression of the trigger produces liquid release, as well as release of primary and secondary air. On termination of painting the reverse applies: liquid release is terminated before primary and secondary air release is terminated.

The pressure of the primary air is the same as that of the secondary air in this embodiment, both typically being 1 bar (above atmospheric pressure). However there is provision in the upstream apparatus for varying these air pressures independently of each other.

In these examples the air pressure used to advance the liquid is typically 2 bars (above atmospheric pressure). There is provision in the upstream apparatus for varying this pressure in order to change the operating characteristics. Such variation may be effected independently of any variation in the primary and secondary air pressures.

The quantity of liquid sprayed from the spray applicator may be further controlled by a regulator valve provided in the spray applicator. The regulator valve has a needle valve whose distal end is adjacent the nozzle and whose proximal end is under the control of a dial. The dial is located at the end of the barrel remote from the spray head. Turning the dial advances or withdraws the needle. The needle valve is housed within an annular chamber extending substantially within the major extent of the barrel. This is a known valve and is described in WO 2016/024107 A1, which may be consulted if needed.

Thus the operator may have a number of control elements at his or her disposal, within the spray assembly, namely:
- an on-off actuator, for example a trigger, which permits or prohibits flow of liquid, primary air and secondary air
- a regulator to control the pressure applied to the liquid, to deliver it to the spray applicator
- a regulator within the spray applicator, to control the flow of the liquid to be sprayed
- a regulator for the pressure of primary (atomising) air
- a regulator for the pressure of secondary (used to modify the spray pattern)

Paint spray apparatus as described and defined herein may be excellent in spray performance with certain paints, which are defined herein. It can spray such paints smoothly and accurately, with little spread of paint on the substrate, low misting (paint released into the air), good levelling and good thickness control. Other paints are less optimally sprayed. The further examples examine the performance of paint compositions within the paint apparatus described above.

### EXPERIMENTAL WORK ON PAINT COMPOSITIONS

The invention is further illustrated by the following Examples.

Sprayable liquids, in the form of aqueous non-Newtonian pigmented paints, were prepared by mixing together the constituents as listed in the Tables 1-4.

The low shear viscosity of the paints was measured with Physica Rheolab MC1 viscosimeter using an E100 spindle at a rotation speed at of 181 rpm at 23°C.

The solids content of the formulations was calculated from the percentage solids material of the constituents and the quantity of solids is expressed as a weight percentage based on the total formulation. For example the binders and the associative polymers are liquid dispersions of known solids content. Some components are solids, for example mica and clay - thus having 100% solids content. Other components are liquids with no solid content - for example water, and ammonia 25% - 0% solids content. From such information the solids content of the examples was calculated, and is stated in the tables below.

For application, a paint was filled into a 2 litre reservoir of the receptacle of the type described above and positioned in the receptacle holding part of the support structure. Using the air pressurising device, the reservoir in the main body of the liquid spray was pressurised to a nominal pressure of 2 bar (that is, 2 bar above atmospheric pressure) and the liquid outlet valve of the spray applicator was opened allowing the paint to be propelled from the reservoir. The paint was advanced into and through the spray applicator described herein and a spray of paint was expelled through the liquid outlet of the spray applicator with reference to Figs. 20 and 21 described above. Primary (atomising) air was delivered to the outlets 360e, 362e, immediately adjacent to the paint nozzle. The air conduit delivering primary (atomising) air was pressurised to a nominal pressure of 1 bar (that is, 1 bar above atmospheric pressure). Downstream air was delivered to the outlets 370e, 375e, downstream of the paint nozzle. The air conduit delivering secondary air downstream was pressurised to a nominal pressure of 1 bar (that is, 1 bar above atmospheric pressure)

A successful paint should atomise well and in order to obtain a narrow spray pattern and minimal overspray, the length of the spray outline may be 17 cm ± 5 cm at a point 7 cm from the spray outlet. The paint was applied using the liquid spray assembly to a vertically positioned tin plate (100 x 72 cm) at a wet film thickness of 120 to 140 µm, which was checked at random points in the film with a wet film thickness gauge.

The spray mist that was formed during the spray application in an area of about 1 m³ around the substrate was assessed visually by three impartial observers. The mist formation is assessed by means of a notation scale, from 0 (hardly any mist observed) to 5 (severe mist formation). The denoted rating is the median of the three observations and is expressed as six-step classification wherein the first three steps (0, 1 and 2) are considered as pass in a pass/fail assessment.

The levelling was appraised by the extent of fading of the coarse droplet-like spray pattern of the wet paint and the formation of a smooth film during the early stages of drying. The levelling rating is established by means of a notation scale, from 0 (excellent levelling) to 5 (very poor levelling).

The hold-up is determined visually by the degree of runs and sags in the dried paint film. A six-step classification is given, from 0 (no sags) to 5 (unacceptable).

The overspray was determined by spraying the paint onto a black Leneta foil from a distance of 7 cm from the liquid outlet resulting in a solid conical spray outline (termed: 'the length of conical spray') and a discontinuous and speckled periphery; overspray (in cm). To avoid wide-ranging masking during spray application, the drift onto unintended objects should be minimal and an overspray of maximal 7 cm is considered to be acceptable.

In the following examples shown in Tables 1-4 the type of HEUR associative thickener used was ACRYSOL RM-12W. This is a non-ionic hydrophobically modified polyethylene oxide urethane product in water as solvent. As-supplied solids content is 19 % wt/wt, in water. In Example 8 shown in Table 5 the type of HEUR associative thickener used was ACRYSOL RM-825. This is a non-ionic hydrophobically modified polyethylene oxide urethane product in water as solvent. As supplied solids contents is 25 % wt/wt.

In the following examples the type of HASE associative thickener used was ACRYSOL TT-935 ER. This is a anionic hydrophobically modified alkali-swellable acrylic thickener. As-supplied solids content was 30 % wt/wt. The material as added to the paints had 40 % wt/wt of ACRYSOL TT-935R and 60 % wt/wt of an ethyl diglycol / water / ammonia carrier. Thus the resulting HASE composition has a solids content of 12 % wt/wt.

The ACRYSOL products are available from Dow. ACRYSOL is believed to be a Registered Trade Mark and it acknowledged as such.

In the following examples the following non-associative thickeners were used:
- methyl hydroxyethyl cellulose thickener, solids content 96 % wt/wt
- alkali-soluble emulsion acrylic thickener, solids content 28 % wt/wt
- organically-modified hectorite clay, solids content 100 % wt/wt

**Table1A**

| COMPOSITION | Example 1 | Example 2 | Comparative Example 1 | Comparative Example 2 | Comparative Example 3 |
|---|---|---|---|---|---|
| | Parts by Wt | Parts by Wt | Parts by Wt | Parts by Wt | Parts by Wt |
| Water | 9.4 | 9.0 | 65.3 | 7.3 | 9.6 |
| Biocides | 0.1 | 0.1 | 0.0 | 0.1 | 0.1 |
| Organic solvents | 0.5 | 0.5 | 0.2 | 0.5 | 0.5 |
| Pigment wetting agents | 1.3 | 1.3 | 0.4 | 1.3 | 1.3 |
| Defoamer | 1.4 | 1.4 | 0.5 | 1.4 | 1.4 |
| Extender, barium sulfate | 9.4 | 9.3 | 3.1 | 9.4 | 9.5 |
| Extender, mica | 4.2 | 4.2 | 1.4 | 4.2 | 4.3 |
| Extender, nepheline syenite | 15.5 | 15.4 | 5.2 | 15.5 | 15.7 |
| Ammonia 25% | 0.1 | 0.1 | 0.0 | 0.1 | 0.1 |
| Binder, alkyd emulsion (42 wt% solids) | 47.1 | 46.7 | 15.6 | | 47.6 |
| Binder, alkyd emulsion (60 wt% solids) | | | | 52.7 | |
| Metal drier | 0.2 | 0.2 | 0.1 | 0.2 | 0.2 |
| Surface wetting agent | 0.3 | 0.3 | 0.1 | 0.3 | 0.3 |
| Wax emulsion | 2.5 | 2.5 | 0.8 | | 2.5 |
| Silicone additive | 0.4 | 0.4 | 0.1 | 0.4 | 0.4 |
| Colorant white | 4.1 | 4.1 | 1.4 | 4.1 | 4.1 |
| Colorant black | 2.4 | 2.4 | 0.8 | 2.4 | 2.4 |
| Associative thickener HASE | 0.3 | 0.4 | | | |
| Associative thickener HEUR | 0.8 | 0.4 | 5.0 | 0.1 | |
| Hydrophilic fumed silica | | 1.4 | | | |
| Methyl hydroxyethyl cellulose thickener | | | | | |
| Alkali-soluble emulsion acrylic thickener | | | | | |
| Organically-modified hectorite clay | | | | | |

| paint characteristics | | | | | |
|---|---|---|---|---|---|
| wt% solids | 57.1 | 58.0 | 19.8 | 67.8 | 57.5 |
| low shear viscosity [dPa.s] | 12.1 | 11.8 | 12.1 | 11.3 | 1 |
| wt% thickener (active agent(s)) | 0.2 | 0.1 | 1.0 | 0.019 | 0 |
| ratio associative thickener on total thickener composition | 1 | 1 | 1 | 1 | - |

| application performance | | | | | |
|---|---|---|---|---|---|
| length of conical spray (cm) | 13 | 22 | 11 | 13 | 18 |
| mist formation | 0 | 1 | 3 | 0 | 2 |
| levelling | 1 | 1 | 5 | 4 | 0 |
| hold-up | 1 | 0 | 0 | 0 | 5 |

**Table 1B (continuation of Table 1A)**

| COMPOSITION | Comparative Example 4 | Comparative Example 5 | Comparative Example 6 | Comparative Example 7 | Comparative Example 8 |
|---|---|---|---|---|---|
| | Parts by Wt | Parts by Wt | Parts by Wt | Parts by Wt | Parts by Wt |
| Water | 9.3 | 9.3 | 9.5 | 11.2 | 9.5 |
| Biocide | 0.1 | 0.1 | 0.1 | 0.1 | 0.1 |
| Organic solvent | 0.5 | 0.5 | 0.5 | 0.5 | 0.5 |
| Pigment wetting agent | 1.3 | 1.3 | 1.3 | 1.3 | 1.3 |
| Defoamer | 1.4 | 1.4 | 1.4 | 1.4 | 1.4 |
| Extender, barium sulfate | 9.2 | 9.3 | 9.5 | 9.2 | 9.4 |
| Extender, mica | 4.2 | 4.2 | 4.3 | 4.1 | 4.2 |
| Extender, nepheline syenite | 15.3 | 15.3 | 15.6 | 15.2 | 15.6 |
| Ammonia 25% | 0.1 | 0.1 | 0.1 | 0.3 | 0.1 |
| Binder, alkyd emulsion (42 wt% solids) | 46.2 | 46.4 | 47.3 | 46.0 | 47.2 |
| Binder, alkyd emulsion (60 wt% solids) | | | | | |
| Metal drier | 0.2 | 0.2 | 0.2 | 0.2 | 0.2 |
| Surface wetting agent | 0.3 | 0.3 | 0.3 | 0.3 | 0.3 |
| Wax emulsion | 2.4 | 2.4 | 2.5 | 2.4 | 2.5 |
| Silicone additive | 0.3 | 0.4 | 0.4 | 0.3 | 0.4 |
| Colorant white | 4.0 | 4.0 | 4.2 | 4.0 | 4.2 |
| Colorant black | 2.3 | 2.3 | 2.4 | 2.3 | 2.4 |
| Associative thickener HASE | 0.3 | 0.3 | | | |
| Associative thickener HEUR | 2.6 | 2.1 | | | |
| Hydrophilic fumed silica | | | | | |
| Methyl hydroxyethyl cellulose thickener | | | 0.4 | | |
| Alkali-soluble emulsion acrylic thickener | | | | 1.1 | |
| Organically-modified hectorite clay | | | | | 0.7 |

| paint characteristics | | | | | |
|---|---|---|---|---|---|
| wt% solids | 56.4 | 56.5 | 57.6 | 55.9 | 57.8 |
| low shear viscosity [dPa.s] | 89 | 51 | 11.1 | 12.9 | 11.3 |
| wt% thickener (active agent(s)) | 0.5 | 0.4 | 0.4 | 0.3 | 0.7 |
| ratio associative thickener on total thickener composition | 1 | 1 | 0 | 0 | 0 |

| application performance | | | | | |
|---|---|---|---|---|---|
| length of conical spray (cm) | too viscous to be applied | too viscous to be applied | 20 | 18 | 18 |
| mist formation | | | 3 | 1 | 1 |
| levelling | | | 4 | 3 | 5 |
| hold-up | | | 0 | 0 | 1 |

The results of Tables 1A and 1B show that aqueous coating compositions having a solids content of the composition in the range from 30wt% to 65wt%, exhibiting a viscosity value of at least 5 dPa.s and not exceeding 50 dPa.s and containing from 0.05 to 2.0 wt% based on the total weight of the composition of at least one organic or organically modified thickener where over 50 wt% is an associative thickener (based on the total weight of organic or organically modified thickener) showed good spray behaviour with limited mist formation and appropriate levelling and hold-up of the dried film. The insufficient hold-up of Comparative Example 3 demonstrates that the aqueous coating composition for application by the liquid spray apparatus should contain at least 0.05 wt% based on the total weight of the composition of at least one thickener.

dPa.s stands for decipascal seconds. 10 dPa.s equates to 1 Pa.s.

In Table 1 and in the other tables herein
'Biocide' is ACTICIDE MBS 5050 which contains 1,2-benzisothiazolin-3-one and 2-methyl-4-isothiazolin-3-one. It is available from Thor.
'Organic solvent' is propylene glycol.
'Pigment wetting agent' is DISPERBYK 190 which comprises a high molecular weight block copolymer with pigment affinic groups. It is available from Byk.
'Defoamer' is TEGO FOAMEX 810 which comprises polyether siloxane copolymer and fumed silica. It is available from Evonik.
'Metal drier' is BORCHERS OXY-COAT which comprises an active iron complex in propylene glycol. It is available from Borchers.
'Surface wetting agent' is SURFYNOL 104E which comprises tetramethyldec-5-yne-4,7-diol. It is available from Evonik.
'Wax emulsion' is AQUACER 513 which is a non-ionic emulsion based on an oxidized HD polyethylene wax. It is available from Byk.

**Table 2**

| COMPOSITION | Example 1 | Example 3 | Example 4 | Example 5 | Comparative Example 9 |
|---|---|---|---|---|---|
| | Parts by Wt | Parts by Wt | Parts by Wt | Parts by Wt | Parts by Wt |
| Water | 9.4 | 21.1 | 33.1 | 43.8 | 55.1 |
| Biocides | 0.1 | 0.1 | 0.1 | 0.1 | 0.0 |
| Organic solvents | 0.5 | 0.4 | 0.3 | 0.3 | 0.2 |
| Pigment wetting agents | 1.3 | 1.1 | 1.0 | 0.8 | 0.6 |
| Defoamer | 1.4 | 1.2 | 1.0 | 0.8 | 0.6 |
| Extender, barium sulfate | 9.4 | 8.1 | 6.8 | 5.6 | 4.3 |
| Extender, mica | 4.2 | 3.7 | 3.0 | 2.5 | 1.9 |
| Extender, nepheline syenite | 15.5 | 13.4 | 11.2 | 9.2 | 7.1 |
| Ammonia 25% | 0.1 | 0.1 | 0.1 | 0.1 | 0.1 |
| Binder, alkyd emulsion (42 wt% solids) | 47.1 | 40.6 | 33.8 | 27.8 | 21.4 |
| Metal drier | 0.2 | 0.2 | 0.1 | 0.1 | 0.1 |
| Surface wetting agent | 0.3 | 0.2 | 0.2 | 0.2 | 0.1 |
| Wax emulsion | 2.5 | 2.1 | 1.8 | 1.5 | 1.1 |
| Silicone additive | 0.4 | 0.3 | 0.3 | 0.2 | 0.2 |
| Colorant white | 4.1 | 3.5 | 2.9 | 2.4 | 1.9 |
| Colorant black | 2.4 | 2.0 | 1.7 | 1.4 | 1.1 |
| Associative thickener HASE | 0.3 | | | | |
| Associative thickener HEUR | 0.8 | 1.8 | 2.6 | 3.4 | 4.2 |

| paint characteristics | | | | | |
|---|---|---|---|---|---|
| wt% solids | 57.1 | 50.0 | 42.0 | 34.8 | 27.0 |
| low shear viscosity [dPa.s] | 12.1 | 12.6 | 12.5 | 12.2 | 12.2 |
| wt% thickener (active agent(s)) | 0.2 | 0.3 | 0.5 | 0.6 | 0.8 |
| ratio associative thickener on total thickener composition | 1 | 1 | 1 | 1 | 1 |

| application performance | | | | | |
|---|---|---|---|---|---|
| length of conical spray (cm) | 13 | 18 | 19 | 18 | 27 |
| mist formation | 0 | 0 | 2 | 2 | 3 |
| levelling | 1 | 0 | 0 | 0 | 5 |
| hold-up | 1 | 0 | 0 | 0 | 0 |

Example 1 of Table 2 is physical repetition of Example 1 of Table 1A, to assess reproducibility. The example was re-formulated and re-tested, now with the examples of Table 2.

The test results as presented in Table 2 show that the solids content of an aqueous paint composition for application by the liquid spray assembly should be at least 30% (calculated as weight solids content) to avoid unacceptable mist formation and inadequate levelling.

**Table 3**

| COMPOSITION | Example 1 | Comparative Example 10 | Comparative Example 11 | Comparative Example 12 | Comparative Example 13 | Comparative Example 14 |
|---|---|---|---|---|---|---|
| | Parts by Wt | Parts by Wt | Parts by Wt | Parts by Wt | Parts by Wt | Parts by Wt |
| Water | 9.4 | 9.4 | 9.4 | 9.5 | 9.5 | 9.5 |
| Biocides | 0.1 | 0.1 | 0.1 | 0.1 | 0.1 | 0.1 |
| Organic solvents | 0.5 | 0.5 | 0.5 | 0.5 | 0.5 | 0.5 |
| Pigment wetting agents | 1.3 | 1.3 | 1.3 | 1.3 | 1.3 | 1.3 |
| Defoamer | 1.4 | 1.4 | 1.4 | 1.4 | 1.4 | 1.4 |
| Extender, barium sulfate | 9.4 | 9.4 | 9.4 | 9.4 | 9.4 | 9.4 |
| Extender, mica | 4.2 | 4.2 | 4.2 | 4.2 | 4.2 | 4.2 |
| Extender, nepheline syenite | 15.5 | 15.5 | 15.5 | 15.6 | 15.6 | 15.6 |
| Ammonia 25% | 0.1 | 0.1 | 0.1 | 0.1 | 0.1 | 0.1 |
| Binder, alkyd emulsion (42 wt% solids) | 47.1 | 47.0 | 47.0 | 47.1 | 47.1 | 47.1 |
| Metal drier | 0.2 | 0.2 | 0.2 | 0.2 | 0.2 | 0.2 |
| Surface wetting agent | 0.3 | 0.3 | 0.3 | 0.3 | 0.3 | 0.3 |
| Wax emulsion | 2.5 | 2.5 | 2.5 | 2.5 | 2.5 | 2.5 |
| Silicone additive | 0.4 | 0.4 | 0.4 | 0.4 | 0.4 | 0.4 |
| Colorant white | 4.1 | 4.1 | 4.1 | 4.1 | 4.1 | 4.1 |
| Colorant black | 2.4 | 2.4 | 2.4 | 2.4 | 2.4 | 2.4 |
| Associative thickener HASE | 0.3 | | | | | |
| Associative thickener HEUR | 0.8 | 1.0 | 0.8 | 0.7 | 0.6 | 0.3 |
| Organically-modified hectorite clay | | 0.2 | 0.3 | 0.4 | 0.5 | 0.7 |

| paint characteristics | | | | | | |
|---|---|---|---|---|---|---|
| wt% solids | 57.1 | 57.2 | 57.3 | 57.4 | 57.5 | 57.7 |
| low shear viscosity [dPa.s] | 12.1 | 12.2 | 11.8 | 11.9 | 12.1 | 12.2 |
| wt% thickener (active agent(s)) | 0.2 | 0.4 | 0.5 | 0.5 | 0.6 | 0.7 |
| ratio associative thickener on total thickener composition | 1 | 0.47 | 0.34 | 0.24 | 0.17 | 0.06 |

| application performance | | | | | | |
|---|---|---|---|---|---|---|
| length of conical spray (cm) | 13 | 16 | 19 | 16 | 20 | 19 |
| mist formation | 0 | 0 | 0 | 0 | 0 | 0 |
| levelling | 1 | 4 | 4 | 4 | 5 | 5 |
| hold-up | 1 | 1 | 1 | 1 | 1 | 1 |

Example 1 of Table 3 is repetition of Example 1 of Table 1A and Table 2, to assess reproducibility. The example was re-formulated and re-tested, now with the examples of Table 3.

The test results of Table 3 show that the thickener in the aqueous paint composition for application by the liquid spray assembly should comprise at least 50 wt% (based on the total weight of thickener) of an associative thickener. A higher concentration of a non-associative organic or organically-modified thickener at the expensive of an associative thickener results in an unacceptable deterioration of the levelling performance.

**Table 4**

| COMPOSITION | Example 6 | Example 7 | Comparative Example 15 | Comparative Example 16 | Comparative Example 17 |
|---|---|---|---|---|---|
| | Parts by Wt | Parts by Wt | Parts by Wt | Parts by Wt | Parts by Wt |
| Water | 12.0 | 37.3 | 12.1 | 14.0 | 12.0 |
| Biocides | 0.1 | 0.1 | 0.1 | 0.1 | 0.1 |
| Organic solvents | 0.5 | 0.4 | 0.5 | 0.5 | 0.5 |
| Pigment wetting agents | 1.8 | 1.2 | 1.8 | 1.7 | 1.8 |
| Defoamer | 3.5 | 2.4 | 3.5 | 3.4 | 3.5 |
| Titanium dioxide | 14.4 | 10.0 | 14.5 | 14.0 | 14.4 |
| Extender, mica | 3.1 | 2.2 | 3.2 | 3.1 | 3.2 |
| Extender, nepheline syenite | 13.2 | 9.1 | 13.3 | 12.9 | 13.2 |
| Ammonia 25% | 0.1 | 0.1 | 0.1 | 0.3 | 0.1 |
| BINDER, ALKYD EMULSION (42 wt% solids) | 46.5 | 32.2 | 46.8 | 45.3 | 46.6 |
| Metal drier | 0.2 | 0.1 | 0.2 | 0.2 | 0.2 |
| Surface wetting agent | 0.3 | 0.2 | 0.3 | 0.3 | 0.3 |
| Wax emulsion | 2.8 | 1.9 | 2.8 | 2.7 | 2.8 |
| Silicone additive | 0.4 | 0.3 | 0.4 | 0.4 | 0.4 |
| Associative thickener HEUR | 1.0 | 2.5 | | | |
| Methyl hydroxyethyl cellulose thickener | | | 0.5 | | |
| Alkali-soluble emulsion acrylic thickener | | | | 1.1 | |
| Organically-modified hectorite clay | | | | | 0.9 |

| paint characteristics | | | | | |
|---|---|---|---|---|---|
| wt% solids | 56.3 | 39.3 | 56.9 | 55.0 | 57.1 |
| low shear viscosity [dPa.s] | 12.1 | 12.5 | 11.2 | 12.6 | 11 |
| wt% thickener (active agent(s)) | 0.20 | 0.48 | 0.49 | 0.32 | 0.93 |
| ratio associative thickener on total thickener composition | 1 | 1 | 0 | 0 | 0 |

| application performance | | | | | |
|---|---|---|---|---|---|
| length of conical spray (cm) | 18 | 11 | 18 | 17 | 18 |
| overspray (cm) | 6.5 | 7 | 6 | >12 | 6.5 |
| levelling | 1 | 0 | 4 | 4 | 5 |
| hold-up | 0 | 0 | 0 | 0 | 2 |

Table 4 shows the test results of white pigmented aqueous paint compositions for application by the liquid spray assembly. As shown by the comparative Examples 15 - 17, the use of a non-associative thickener as sole rheology modifier leads to unacceptable levelling performances. The use of an alkali-soluble emulsion acrylic thickener leads to extensive overspray, necessitating substantial masking to avoid drift onto unintended objects.

**Table 5**

| | Example 8 |
|---|---|
| COMPOSITION | Parts by Weight |
| | |
| Water | 15.0 |
| Biocides | 0.2 |
| Organic solvents | 5.9 |
| Pigment wetting agents | 1.7 |
| Defoamer | 1.1 |
| Titanium dioxide | 13.2 |
| Extender, calcium carbonate | 6.3 |
| Hydrophilic fumed silica | 1.0 |
| Ammonia 25% | 0.2 |
| Binder, PU-modified acrylic dispersion (41 wt% solids) | 51.6 |
| Surface wetting agent | 0.2 |
| Wax emulsion | 2.6 |
| Silicone additive | 0.4 |
| Associative thickener HASE | 0.5 |
| Associative thickener HEUR | 0.1 |

| paint characteristics | |
|---|---|
| wt% solids | 44.5 |
| Haake viscosity [dPa.s] | 21.7 |
| wt% thickener (active agent(s)) | 0.1 |
| ratio associative thickener on total thickener composition | 1 |

| application performance | |
|---|---|
| length of conical spray (cm) | 22 |
| overspray (cm) | 7 |
| levelling | 1 |
| hold-up | 1 |

Table 5 shows the use of a PU-modified acrylic binder and of an alternative HEUR associative thickener ACRYSOL RM-825.

In summary, exemplary embodiments of a liquid spray assembly and method of using a liquid spray assembly have been described. It is believed that the described exemplary embodiments describing a liquid spray assembly, being the combination of liquid spray apparatus and liquids have defined properties of solids content, thickener profile and viscosity offer improvements over known liquid spray apparatus and methods. The liquid spray assembly of the exemplary embodiments is convenient to manufacture and straightforward to use. Furthermore, the liquid spray assembly of the exemplary embodiments is easy to transport and accurate to apply a liquid to a surface to be coated by the liquid. Liquids having the characteristics described above have been shown to perform excellently.

The liquid spray assembly may be manufactured industrially. Industrial application of the example embodiments will be clear from the discussion herein.

Although exemplary embodiment of the present invention have been shown and described, it will be appreciated by those skilled in the art that changes may be made without departing from the scope of the invention as defined in the claims.

Capitalised names given herein for products are trade marks and may be Registered Trade Marks.

As used herein, unless otherwise expressly specified, all numbers such as those expressing values, ranges, amounts or percentages may be read as if prefaced by the word "about", even if the term does not expressly appear. Also, the recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Singular encompasses plural and vice versa. For example, although reference is made herein to "a cartridge", "a nozzle", "a thickener" and the like, one or more of each of these and any other components can be used.

As used herein, the term "polymer" refers to oligomers and both homopolymers and copolymers, and the prefix "poly" refers to two or more.

The terms "comprising", "comprises" and "comprised of" as used herein are synonymous with "including", "includes" or "containing", "contains", and are inclusive or open-ended and do not exclude additional, non-recited members, elements or method steps. Additionally, although the present invention has been described in terms of "comprising", the coating liquids detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

## Claims

1. A liquid spray assembly comprising a liquid spray apparatus and a liquid to be sprayed therefrom,
wherein the liquid spray apparatus comprises:
- a reservoir having a liquid outlet
- a spray applicator connected to the reservoir to receive liquid therefrom
- means for urging liquid from the reservoir to the spray applicator
- an outlet in the spray applicator for the expulsion of liquid
- a primary gas outlet in the spray applicator for atomising expelled liquid
- a secondary gas outlet in the spray applicator for impinging upon the expelled and atomised liquid and modifying its spray profile
wherein the liquid satisfies each of the following parameters:
a) the solids content of the liquid is in the range from 30 wt% to 65 wt%, based on the total weight of the composition
b) the liquid has a low shear viscosity (measured on a Physica Rheolab MC1 viscometer using a E100 spindle at a rotation speed of 181 rpm at 23°C) in the range from 5 dPa.s to 50 dPa.s
c) the liquid contains from 0.03 to 2 wt% (based on the total weight of the composition) of an organic or organically modified thickener where over 50 wt% (based on the total weight of said organic or organically modified thickener) is an organic or organically modified associative thickener.

2. An assembly according to claim 1, wherein the liquid has a solids content of at least 38 wt.

3. A liquid spray assembly according to any preceding claim wherein the liquid has a solids content of up to 60 wt%.

4. An assembly according to any preceding claim wherein the liquid has a low shear viscosity (measured as defined herein) of at least 8 dPa.s.

5. An assembly according to any preceding claim wherein the liquid has a low shear viscosity (measured as defined herein) of up to 40 dPa.s.

6. An assembly according to any preceding claim wherein the liquid contains at least 0.05 wt% of organic or organically-modified associative thickener based on the total weight of the composition.

7. An assembly according to any preceding claim wherein the liquid contains up to 1 wt% of organic or organically-modified associative thickener based on the total weight of the composition.

8. An assembly according to any preceding claim wherein at least 60 wt% of organic or organically-modified thickener present are organic or organically-modified associative thickener.

9. An assembly according to any preceding claim, wherein the organic or organically-modified associative thickener is the only organic or organically-modified thickener present.

10. An assembly according to any preceding claim wherein the organic or organically modified associative thickener comprises a Hydrophobically modified Alkali Swellable Emulsion (HASE) thickener and/or a Hydrophobically modified Ethylene oxide Urethane Rheology (HEUR) thickener.

11. An assembly according to any preceding claim wherein the coating liquid is a paint, varnish or lacquer.

12. An assembly as claimed in any preceding claim wherein the liquid spray apparatus comprises:
- a main body which houses the reservoir, and
- a displacement member moveable within the main body for varying the volume of the reservoir thereby urging the liquid through the liquid outlet of the reservoir and towards the spray applicator.

13. An assembly as claimed in claim 12 wherein the displacement member has a liquid contacting side and a gas contacting side, and wherein the main body comprises a gas inlet in fluid communication with the gas contacting side of the displacement member; wherein the liquid spray apparatus comprises pressurised gas in fluid communication with the gas contacting side of the displacement member and arranged to be operable to move the displacement member and thereby advance the liquid from the reservoir to the spray applicator.

14. An assembly as claimed in any preceding claim wherein pressurised gas urges the liquid to the spray applicator and is delivered to the primary and secondary gas outlets.

15. An assembly as claimed in any preceding claim wherein the spray applicator comprises an actuator to control the flow of liquid, primary gas and secondary gas to the outlet of the spray applicator, the actuator being biased towards its off position.

16. An assembly according to any preceding claim wherein the pressure of gas in the primary gas conduit is up to 1.5 bar (1.5 x 10⁵ Pa) over atmospheric pressure; and the pressure of gas in the secondary gas conduit is up to 1.5 bar (1.5 x 10⁵ Pa) over atmospheric pressure.

17. An assembly according to any preceding claim wherein, in use, the liquid and the primary gas produce a divergent spray and the secondary gas modifies the shape of the spray.

18. An assembly according to any preceding claim wherein, in use, secondary gas outlets are provided at the outlet end of spray applicator downstream of the outlet for the liquid and downstream of the outlet for the primary gas and arranged such that secondary gas outlets are generally face each other and produce generally opposed gas flows which are transverse to the flow of the atomised spray, and impinge onto the atomised spray and urge it into a generally elliptical or fan shape.

19. An assembly according to any preceding claim, the assembly being such that on commencement of an individual action of liquid spraying, primary gas is expelled by the spray applicator at the same time as liquid or is expelled before any liquid is expelled; and such that on termination of that individual action of spraying, primary gas flow from the spray applicator is terminated at the same time as liquid flow is terminated, or after liquid flow is terminated.

20. An assembly according to any preceding claim, the assembly being such that on commencement of an individual action of liquid spraying, secondary gas is expelled by the spray applicator at the same time as liquid or is expelled before any liquid is expelled; and such that on termination of that individual action of spraying, secondary gas flow from the spray applicator is terminated at the same time as liquid flow is terminated, or after liquid flow is terminated.

21. A liquid spray assembly comprising a liquid spray apparatus and a liquid to be sprayed therefrom;
wherein the liquid spray apparatus comprises:
- a reservoir containing a liquid and having a liquid outlet, wherein the coating liquid is a paint, varnish or lacquer
- a spray applicator connected to the reservoir to receive liquid therefrom
- a source of compressed air for urging liquid from the reservoir to the spray applicator
- a liquid outlet in the spray applicator for the expulsion of liquid
- a primary air conduit leading to a primary air outlet in the spray applicator adjacent to the liquid outlet, for atomising expelled liquid to form an atomised spray, using the same source of compressed air, wherein the air in the primary air conduit is at a pressure in the range from 0.7 to 1.3 bar (0.7 - 1.3 x 10⁵ Pa)
- a secondary air conduit leading to a secondary air outlets in the spray applicator, wherein the air in the secondary air conduit is at a pressure in the range from 0.7 to 1.3 bar (0.7 - 1.3 x 10⁵ Pa), supplied by the same source of compressed air; wherein the secondary air outlets expel air in opposed air streams onto the atomised spray transversely relative to the flow of the atomised spray, and from opposite sides of the atomised spray;
- a spring-loaded actuator provided on the spray applicator and having an off-position for preventing the expulsion of liquid, primary air and secondary air from the spray applicator and an on-position for permitting the expulsion of liquid, primary air and secondary air from the spray applicator, the actuator being biased towards its off-position; wherein liquid can only be expelled when primary air and secondary air are expelled
- optionally, a liquid control valve to control the air pressure applied to advance the liquid;
- optionally, a primary air control valve to control the primary air pressure; and
- optionally, a secondary air control valve to control the secondary air pressure.
wherein the liquid satisfies each of the following parameters:
a) the solids content of the liquid in the range from 30wt% to 65wt% based on the total weight of the composition
b) the liquid has a low shear viscosity (measured on a Physica Rheolab MC1 viscometer using a E100 spindle at a rotation speed of 181 rpm at 23°C) in the range from 5 dPa.s to 50 dPa.s
c) the liquid contains from 0.03 to 2 wt% (based on the total weight of the composition) of at least one organic or organically modified thickener where over 50 wt% (based on the total weight of said organic or organically modified thickener) is an organic or organically modified associative thickener.

22. A method of using a liquid spray assembly as defined in any preceding claim, comprising the steps of:
- providing the liquid spray apparatus with a reservoir of a coating liquid to be sprayed
- moving the liquid towards the spray applicator
- activating the spray applicator, thereby to:
- expel liquid from the outlet valve of the spray applicator
- expel primary gas from a primary gas outlet of the spray applicator, for atomising the liquid being expelled; and
- expel secondary gas from a secondary gas outlet of the spray applicator for impinging upon the expelled and atomised paint and modifying its spray profile.

23. A kit of parts for a liquid spray assembly as defined in any of claims 1 to 21, comprising:
- a first cartridge housed in a support structure of the liquid supply apparatus, the cartridge containing a coating liquid, the first cartridge being operatively connected to the liquid supply apparatus such that it is able to supply liquid to the spray applicator,
- a second cartridge containing a coating liquid, the second cartridge not operatively connected to the liquid supply apparatus,
- the first cartridge being removable from the support structure when empty and replaceable in the support structure by the second cartridge.
